(19) **Europäisches Patentamt / European Patent Office / Office européen des brevets**

(11) **EP 3 757 686 B1**

(12) # EUROPEAN PATENT SPECIFICATION

(45) Date of publication and mention of the grant of the patent:
**15.04.2026 Bulletin 2026/16**

(21) Application number: **20190670.8**

(22) Date of filing: **03.09.2014**

(51) International Patent Classification (IPC):
**G04G 21/00** (2010.01)  **G06F 1/16** (2006.01)
**G06F 3/01** (2006.01)  **G06F 3/0362** (2013.01)
**G06F 3/0482** (2013.01)  **G06F 3/0485** (2022.01)
**G06F 3/04817** (2022.01)  **G06F 3/04883** (2022.01)

(52) Cooperative Patent Classification (CPC):
**G06F 1/163; G04G 21/00; G06F 3/03547;**
**G06F 3/0362; G06F 3/04817; G06F 3/0482;**
**G06F 3/04842; G06F 3/04845; G06F 3/0485;**
**G06F 3/0487; G06F 3/04883;** G06F 3/016;
G06F 3/017; G06F 2203/04806

(54) **CROWN INPUT FOR A WEARABLE ELECTRONIC DEVICE**

KRONENEINGABE FÜR TRAGBARE ELEKTRONISCHE VORRICHTUNG

ENTRÉE PAR COURONNE POUR DISPOSITIF ÉLECTRONIQUE PORTABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 03.09.2013 US 201361873356 P
03.09.2013 US 201361959851 P
03.09.2013 US 201361873359 P
03.09.2013 US 201361873360 P

(43) Date of publication of application:
**30.12.2020 Bulletin 2020/53**

(62) Document number(s) of the earlier application(s) in accordance with Art. 76 EPC:
**14772494.2 / 3 039 513**

(73) Proprietor: **Apple Inc.**
**Cupertino CA 95014 (US)**

(72) Inventors:
- **Chaudhri, Imran**
  **Cupertino, CA California CA 95014 (US)**
- **Zambetti, Nicholas**
  **San Francisco, cA California CA 94102 (US)**
- **Dascola, Jonathan R.**
  **Cupertino, CA California CA 95014 (US)**
- **Foss, Christopher Patrick**
  **Cupertino, CA California CA 95014 (US)**
- **Dye, Alan C.**
  **Cupertino, CA California CA 95014 (US)**
- **Guzman, Aurelio**
  **Cupertino, CA California CA 95014 (US)**
- **Karunamuni, Chanaka G.**
  **Cupertino, CA California CA 95014 (US)**
- **Kerr, Duncan Robert**
  **Cupertino, CA California CA 95014 (US)**
- **Lemay, Stephen O**
  **Cupertino, CA California CA 95014 (US)**
- **Ive, Jonathan P.**
  **Cupertino, CA California CA 95014 (US)**
- **Wilson, Christopher**
  **Cupertino, CA California CA 95014 (US)**
- **Wilson, Eric Lance**
  **Cupertino, CA California CA 95014 (US)**
- **Yang, Lawrence Y.**
  **Cupertino, CA California CA 95014 (US)**
- **Butcher, Gary I.**
  **Cupertino, CA California CA 95014 (US)**
- **Lynch, Kevin**
  **Cupertino, CA California CA 95014 (US)**

(74) Representative: **Barton, Russell Glen**
**Withers & Rogers LLP**
**2 London Bridge**
**London SE1 9RA (GB)**

(56) References cited:
US-A1- 2008 168 404    US-A1- 2012 054 670
US-B1- 6 661 438    US-B1- 7 081 905

**Description**

CROSS-REFERENCE TO RELATED APPLICATIONS

This application claims priority to U.S. Provisional Patent Application Serial No. 61/873,356, filed September 3, 2013, entitled "CROWN INPUT FOR A WEARABLE ELECTRONIC DEVICE"; U.S. Provisional Patent Application Serial No. 61/873,359, filed September 3, 2013, entitled "USER INTERFACE OBJECT MANIPULATIONS IN A USER INTERFACE"; U.S. Provisional Patent Application Serial No. 61/959,851, filed September 3, 2013, entitled "USER INTERFACE FOR MANIPULATING USER INTERFACE OBJECTS"; U.S. Provisional Patent Application Serial No. 61/873,360, filed September 3, 2013, entitled "USER INTERFACE FOR MANIPULATING USER INTERFACE OBJECTS WITH MAGNETIC PROPERTIES"; and U.S. Non-provisional Patent Application Serial No. 14/476,657, filed September 3, 2014, entitled "USER INTERFACE FOR MANIPULATING USER INTERFACE OBJECTS WITH MAGNETIC PROPERTIES".

This application is related to co-pending applications U.S. Non-provisional Patent Application filed September 3, 2014, concurrently herewith, entitled "USER INTERFACE OBJECT MANIPULATIONS IN A USER INTERFACE", naming Nicholas Zambetti et al. as inventors; and U.S. Non-provisional Patent Application filed September 3, 2014, concurrently herewith, entitled "USER INTERFACE FOR MANIPULATING USER INTERFACE OBJECTS", naming Nicholas Zambetti et al. as inventors. This application is also related to U.S. Provisional Patent Application Serial No. 61/747,278, filed December 29, 2012, entitled "Device, Method, and Graphical User Interface for Manipulating User Interface Objects with Visual and/or Haptic Feedback."

**Field**

The following disclosure relates generally to wearable electronic devices and, more specifically, to interfaces for wearable electronic devices.

**Background**

Advanced personal electronic devices can have small form factors. These personal electronic devices can include, but are not limited to, tablets and smart phones. Use of such personal electronic devices involves manipulation of user interface objects on display screens that also have small form factors to complement the design of the personal electronic devices.

Exemplary manipulations that users can perform on personal electronic devices can include navigating a hierarchy, selecting a user interface object, adjusting the position, size, and zoom of user interface objects, or otherwise manipulating the user interfaces. Exemplary user interface objects can include digital images, video, text, icons, maps, control elements, such as buttons, and other graphics. A user can perform such manipulations in image management software, video editing software, word processing software, software execution platforms, such as an operating system's desktop, website browsing software, and other environments.

Existing methods for manipulating user interface objects on reduced-size touch-sensitive displays can be inefficient. Further, existing methods generally provide less precision than is preferable.

US 2012/054670 A1 relates to a method for controlling scrolling of displayed information, comprising: causing a scrolling action on the basis of a scrolling input, detecting a hovering input on the basis of sensing presence of an object in close proximity to an input surface during the scrolling action, and adapting at least one parameter associated with the scrolling action in accordance with the hovering input.

US 7081905 B1 relates to a wearable mobile computing device including a user interface that is used to interact with alarms, time keeping functions and notifications via use of a scroll device, the scroll device implementing dynamic scroll speed controller enabling fine-grain and coarse-grain scroll and/or cursor movement through displayed content. US 6 661 438 B1 relates to a wearable device, in particular a watch type device, with a mechanical crown. The crown is used to scroll content displayed on the device screen.

**Summary**

The present invention provides a computer-implemented method, one or more programs and an electronic device as set out in the appended independent claims.

The present disclosure relates to manipulating a user interface on a wearable electronic device using a mechanical crown. In some examples, the user interface can be scrolled or scaled in response to a rotation of the crown. The direction of the scrolling or scaling and the amount of scrolling or scaling can depend on the direction and amount of rotation of the crown, respectively. In some examples, the amount of scrolling or scaling can be proportional to the change in rotation angle of the crown. In other examples, a velocity of scrolling or a velocity of scaling can depend on a velocity of angular rotation of the crown. In these examples, a greater velocity of rotation can cause a greater velocity of scrolling or scaling to be performed on the displayed view.

## Brief Description of the Drawings

FIG. 1 illustrates an exemplary wearable electronic device according to various examples.

FIG. 2 illustrates a block diagram of an exemplary wearable electronic device according to various examples.

FIG. 3 illustrates an exemplary process for scrolling through applications using a crown according to various examples.

FIGs. 4-8 illustrate screens showing the scrolling of applications using the process of FIG. 3.

FIG. 9 illustrates an exemplary process for scrolling a view of a display using a crown according to various examples.

FIGs. 10-14 illustrate screens showing the scrolling of a view of a display using the process of FIG. 9.

FIG. 15 illustrates an exemplary process for scaling a view of a display using a crown according to various examples.

FIGs. 16-20 illustrate screens showing the scaling of a view of a display using the process of FIG. 15.

FIG. 21 illustrates an exemplary process for scrolling a view of a display based on a angular velocity of rotation of a crown according to various examples.

FIGs. 22-40 illustrate screens showing the scrolling of a view of a display using the process of FIG. 21.

FIG. 41 illustrates an exemplary process for scaling a view of a display based on a angular velocity of rotation of a crown according to various examples.

FIGs. 42-44 illustrate screens showing the scaling of a view of a display using the process of FIG. 41.

FIG. 45 illustrates an exemplary computing system for modifying a user interface in response to a rotation of a crown according to various examples.

## Detailed Description

In the following description of the disclosure and examples, reference is made to the accompanying drawings in which it is shown by way of illustration specific examples that can be practiced. It is to be understood that other examples can be practiced and structural changes can be made without departing from the scope of the disclosure.

The present disclosure relates to manipulating a user interface on a wearable electronic device using a mechanical crown. In some examples, the user interface can be scrolled or scaled in response to a rotation of the crown. The direction of the scrolling or scaling and the amount of scrolling or scaling can depend on the direction and amount of rotation of the crown, respectively. In some examples, the amount of scrolling or scaling can be proportional to the change in rotation angle of the crown. In other examples, a velocity of scrolling or a velocity of scaling can depend on a velocity of angular rotation of the crown. In these examples, a greater velocity of rotation can cause a greater velocity of scrolling or scaling to be performed on the displayed view.

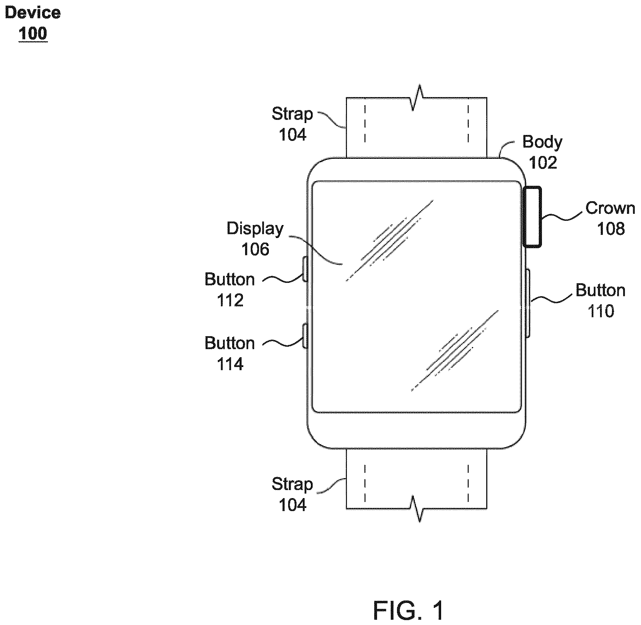

FIG. 1 illustrates exemplary personal electronic device 100. In the illustrated example, device 100 is a watch that generally includes body 102 and strap 104 for affixing device 100 to the body of a user. That is, device 100 is wearable. Body 102 can be designed to couple with straps 104. Device 100 can have touch-sensitive display screen (hereafter touchscreen) 106 and crown 108. Device 100 can also have buttons 110, 112, and 114.

Conventionally, the term 'crown,' in the context of a watch, refers to the cap atop a stem for winding the watch. In the context of a personal electronic device, the crown can be a physical component of the electronic device, rather than a virtual crown on a touch sensitive display. Crown 108 can be mechanical meaning that it can be connected to a sensor for converting physical movement of the crown into electrical signals. Crown 108 can rotate in two directions of rotation (e.g., forward and backward). Crown 108 can also be pushed in towards the body of device 100 and/or be pulled away from device 100. Crown 108 can be touch-sensitive, for example, using capacitive touch technologies that can detect whether a user is touching the crown. Moreover, crown 108 can further be rocked in one or more directions or translated along a track along an edge or at least partially around a perimeter of body 102. In some examples, more than one crown 108 can be used. The visual appearance of crown 108 can, but need not, resemble crowns of conventional watches. Buttons 110, 112, and 114, if included, can each be a physical or a touch-sensitive button. That is, the buttons may be, for example, physical buttons or capacitive buttons. Further, body 102, which can include a bezel, may have predetermined regions on the bezel that act as buttons.

Display 106 can include a display device, such as a liquid crystal display (LCD), light-emitting diode (LED) display, organic light-emitting diode (OLED) display, or the like, positioned partially or fully behind or in front of a touch sensor panel implemented using any desired touch sensing technology, such as mutual-capacitance touch sensing, self-capacitance touch sensing, resistive touch sensing, projection scan touch sensing, or the like. Display 106 can allow a user to perform various functions by touching over hovering near the touch sensor panel using one or more fingers or other object.

In some examples, device 100 can further include one or more pressure sensors (not shown) for detecting an amount of force or pressure applied to the display. The amount of force or pressure applied to display 106 can be used as an input to device 100 to perform any desired operation, such as making a selection, entering or exiting a menu, causing the display of additional options/actions, or the like. In some examples, different operations can be performed based on the amount of force or pressure being applied to display 106. The one or more pressure sensors can further be used to determine a position that the force is being applied to display 106.

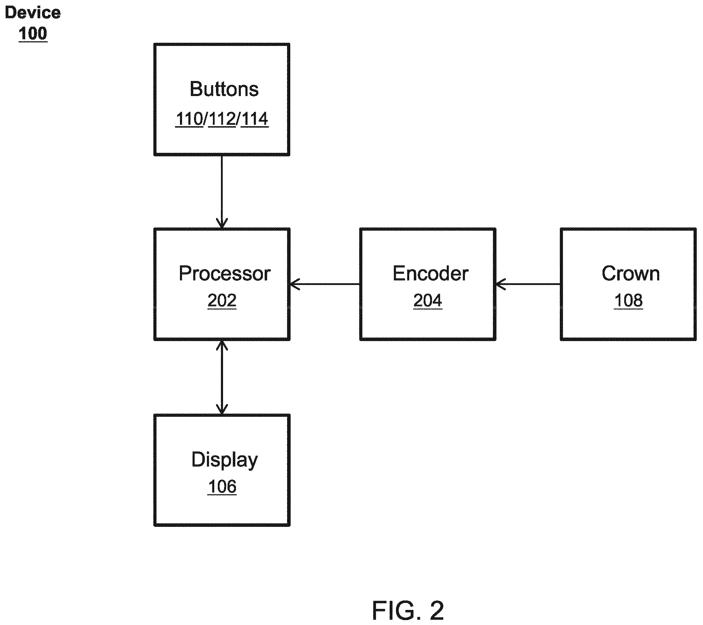

FIG. 2 illustrates a block diagram of some of the components of device 100. As shown, crown 108 can be coupled to encoder 204, which can be configured to monitor a physical state or change of physical state of crown 108 (e.g., the position of the crown), convert it to an electrical signal (e.g., convert it to an analog or digital signal representation of the position or change in position of crown 108), and provide the signal to processor 202. For instance, in some examples, encoder 204 can be configured to sense the absolute rotational position (e.g., an angle between 0-360°) of crown 108 and output an analog or digital representation of this position to processor 202. Alternatively, in other examples, encoder 204 can be configured to sense a change in rotational position (e.g., a change in rotational angle) of crown 108 over some sampling period and to output an analog or digital representation of the sensed change to processor 202. In these examples, the crown position information can further indicate a direction of rotation of the crown (e.g., a positive value can correspond to one direction and a negative value can correspond to the other). In yet other examples, encoder 204 can be configured to detect a rotation of crown 108 in any desired manner (e.g., velocity, acceleration, or the like) and can provide the crown rotational information to processor 202. The rotational velocity can be expressed in numerous ways. For example, the rotational velocity can be expressed in a direction and a speed of rotation, such as hertz, as rotations per unit of time, as rotations per frame, as revolutions per unit of time, as revolutions per frame, as a change in angle per unit of time, and the like. In alternative examples, instead of providing information to processor 202, this information can be provided to other components of device 100. While the examples described herein refer to the use of rotational position of crown 108 to control scrolling or scaling of a view, it should be appreciated that any other physical state of crown 108 can be used.

In some examples, the physical state of the crown can control physical attributes of display 106. For example, if crown 108 is in a particular position (e.g., rotated forward), display 106 can have limited z-axis traversal ability. In other words, the physical state of the crown can represent physical modal functionality of display 106. In some examples, a temporal attribute of the physical state of crown 108 can be used as an input to device 100. For example, a fast change in physical state can be interpreted differently than a slow change in physical state.

Processor 202 can be further coupled to receive input signals from buttons 110, 112, and 114, along with touch signals from touch-sensitive display 106. Processor 202 can be configured to interpret these input signals and output appropriate display signals to cause an image to be produced by touch-sensitive display 106. While a single processor 202 is shown, it should be appreciated that any number of processors or other computational devices can be used to perform the general functions discussed above.

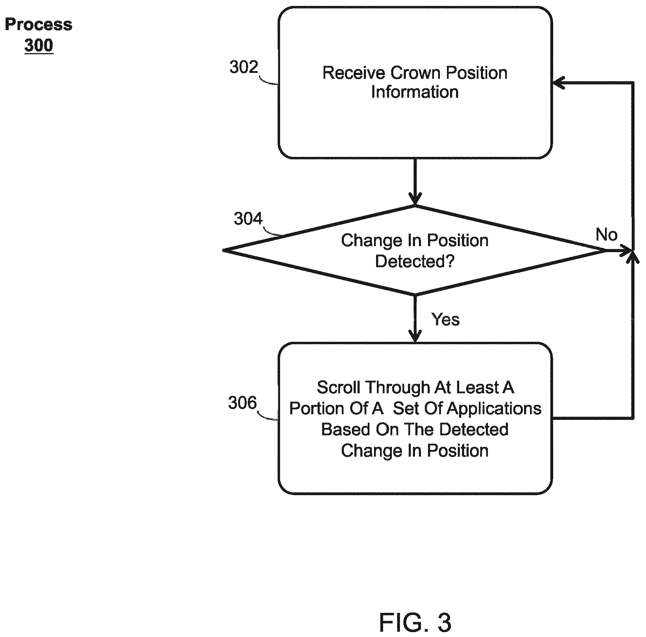

FIG. 3 illustrates an exemplary process 300 for scrolling through a set of displayed applications using a crown according to various examples. In some examples, process 300 can be performed by a wearable electronic device similar to device 100. In these examples, a visual representation (e.g., icons, graphical images, textual images, and the like) of one or more applications of a set of applications can be displayed on display 106 of device 100 and process 300 can be performed to visually scroll through the set of applications by sequentially displaying the applications in response to a turning of crown 108. In some examples, the scrolling can be performed by translating the displayed contents along a fixed axis.

At block 302, crown position information can be received. In some examples, the crown position information can include an analog or digital representation of the absolute position of the crown, such as an angle between 0-360°. In other examples, the crown position information can include an analog or digital representation of a change in rotational position of the crown, such as a change in rotational angle. For example, an encoder similar to encoder 204 can be coupled to a crown similar to crown 108 to monitor and measure its position. The encoder can convert the position of crown 108 into crown position information that can be transmitted to a processor similar to processor 202.

At block 304, it can be determined if a change in position has been detected. In some examples, where the crown position information includes an absolute position of the crown, determining whether a change in position has occurred can be performed by comparing the position of the crown at two different instances in time. For example, the processor (e.g., processor 202) can compare the most recent position of the crown (e.g., crown 108) as indicated by the crown position information to an earlier (e.g., immediately preceding) position of the crown as indicated by previously received crown position information. If the positions are the same or within a threshold value (e.g., a value corresponding to a tolerance of the encoder), it can be determined that no change in position has occurred. If, however, the positions are not the same or are different by at least the threshold value, it can be determined that a change in position has occurred. In other examples, where the crown position information includes a change in position over some length of time, determining whether a change in position has occurred can be performed by determining whether the absolute value of the change in position is equal to zero or is less than a threshold value (e.g., a value corresponding to a tolerance of the encoder). If the absolute value of the change in position is equal to zero or is less than the threshold value, it can be determined that no change in position has occurred. If, however, the absolute value of the change in position is greater than zero or the threshold value, it can be determined that a change in position has occurred.

If it is determined at block 304 that no change in position of the crown has been detected, the process can return to block 302 where new crown position information can be received. If, however, it is instead determined at block 304 that that a change in position of the crown has been detected, the process can proceed to block 306. As described herein, a positive determination at block 304 can cause the process to proceed to block 306, while a negative determination can cause the process to return to block 302. However, it should be appreciated that the determination performed at block 304 can be reversed such that a positive determination can cause the process to return to block 302, while a negative determination can cause the process to proceed to block 306. For example, block 304 can alternatively determine if no change in position is detected.

At block 306, at least a portion of a set of applications can be scrolled through based on the detected change in position. The set of applications can include any ordered or unordered set of applications. For example, the set of applications can include all applications stored on the wearable electronic device, all open applications on the wearable electronic device, a user-selected set of applications, or the like. Additionally, the applications can be ordered based on frequency of use, a user-defined ordering, relevance, or any other desired ordering.

In some examples, block 306 can include visually scrolling through the set of applications by sequentially displaying the applications in response to the detected change in position of the crown. For example, the display (e.g., display 106) can be displaying one or more applications of the set of applications. In response to detecting a change in position of the crown (e.g., crown 108), the currently displayed one or more applications can be translated off the display to make room for one or more other applications to be translated onto the display. In some examples, the one or more other applications being translated onto the display can be selected for display based on their relative ordering within the set of applications corresponding to the direction opposite the direction of translation. The direction of the translation can depend on the direction of the change in position of the crown. For example, turning the crown clockwise can cause a scrolling of the display in one direction, while turning the crown counter-clockwise can cause a scrolling of the display in a second (e.g., opposite) direction. Additionally, the distance or speed of scrolling can depend on the amount of detected change in the position of the crown. The distance of scrolling can refer to the on-screen distance that the content is scrolled. The speed of scrolling can refer to the distance that the content is scrolled over a length of time. In some examples, the distance or speed of the scrolling can be proportional to the amount of detected rotation. For instance, the amount of scroll corresponding to a half-turn of the crown can be equal to 50% of the amount of scroll corresponding to a full turn of the crown. In some examples where the set of applications includes an ordered list of applications, the scrolling can stop in response to reaching the end of the list. In other examples, the scrolling can continue by looping around to the opposite end of the list of applications. The process can then return to block 302 where new crown position information can be received.

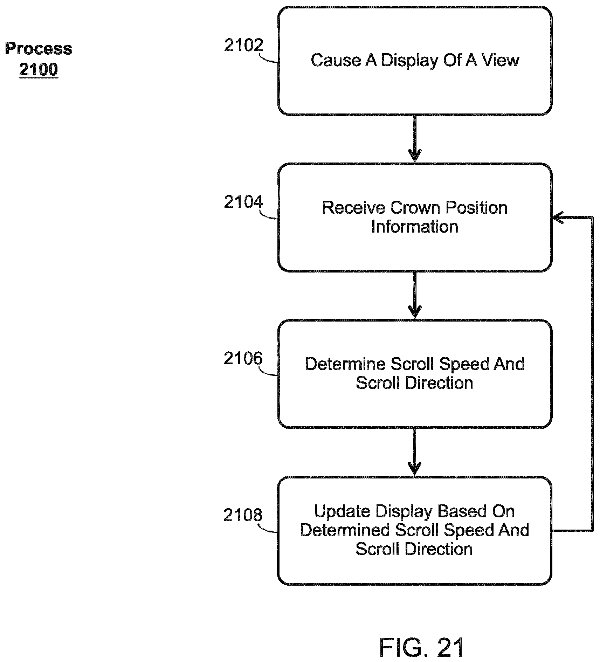

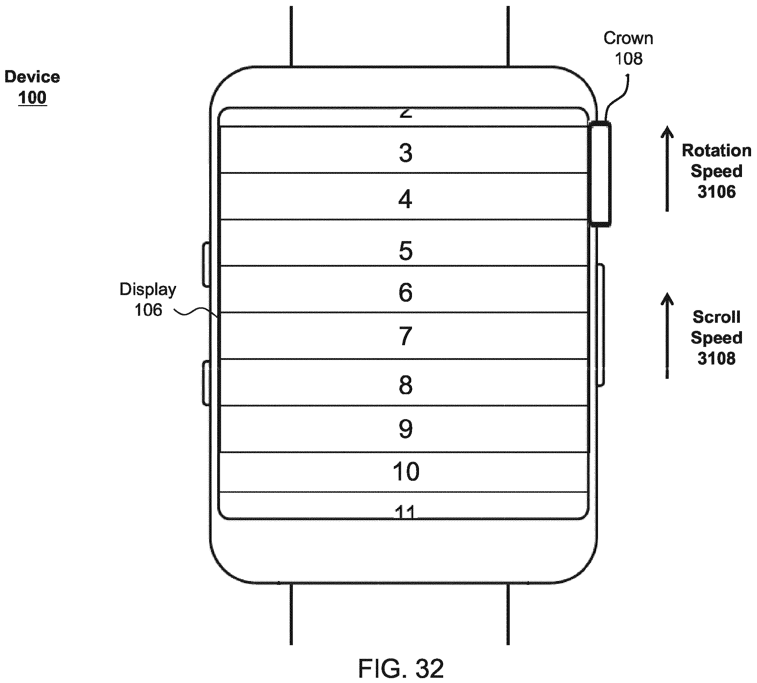

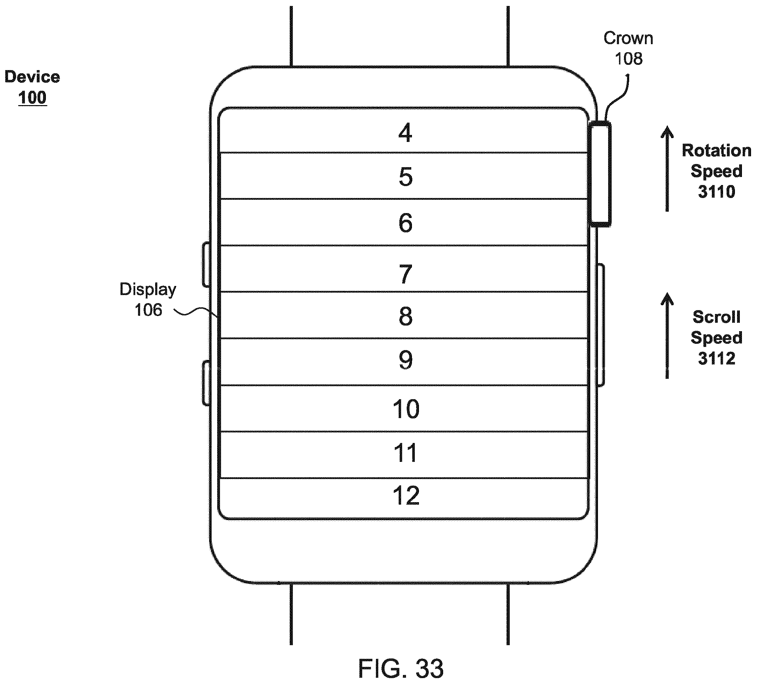

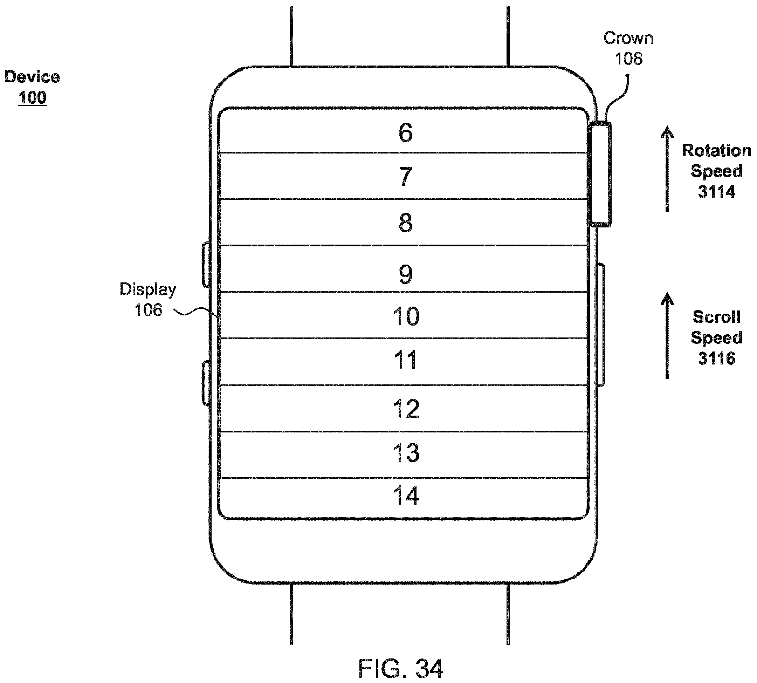

It should be appreciated that the actual values used to linearly map the change in crown position to the distance or speed of scrolling can be varied depending on the desired functionality of the device. Moreover, it should be appreciated that other mappings between the scroll amount or speed and the change in the position of the crown can be used. For example, acceleration, velocity (described in greater detail below with respect to FIGs. 21-44), or the like, can be used to determine the distance or speed of scrolling. Additionally, non-linear mappings between the crown characteristic (e.g., position, velocity, acceleration, etc.) and the scroll amount or scroll speed can be used.

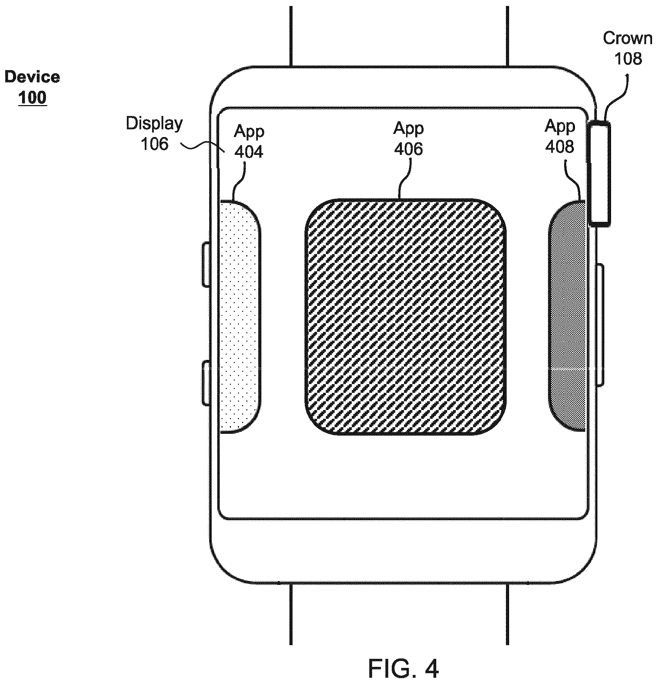

To further illustrate the operation of process 300, FIG. 4 depicts an example interface of device 100 having a visual representation (e.g., icons, graphical images, textual images, and the like) of application 406 and portions of the visual representations of applications 404 and 408. Applications 404, 406, and 408 can be part of a set of applications that includes any group of any number of ordered or unordered applications (e.g., all applications on device 100, all open applications on device 100, user favorites, or the like). At block 302 of process 300, processor 202 of device 100 can receive crown position information from encoder 204. Since crown 108 is not being rotated in FIG. 4, a negative determination can be made by processor 202 at block 304, causing the process to return to block 302.

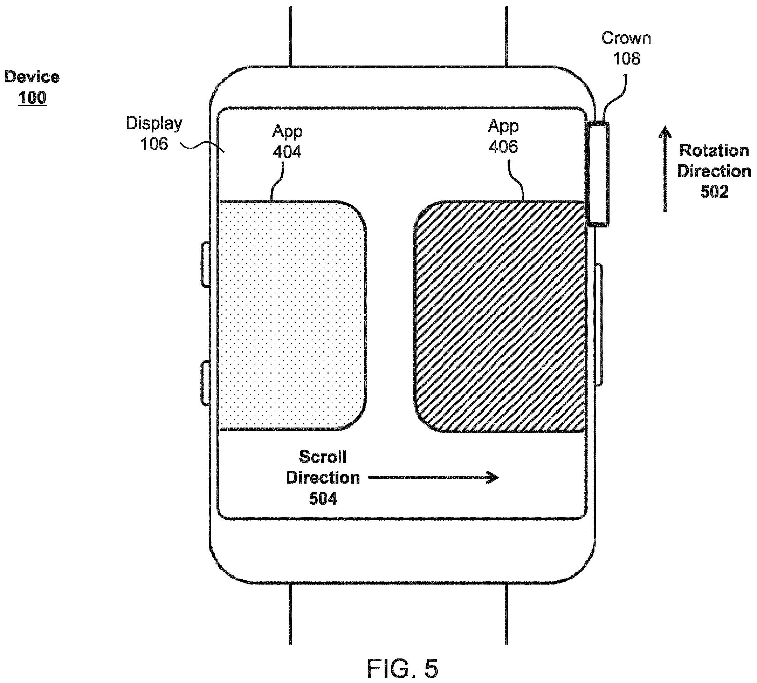

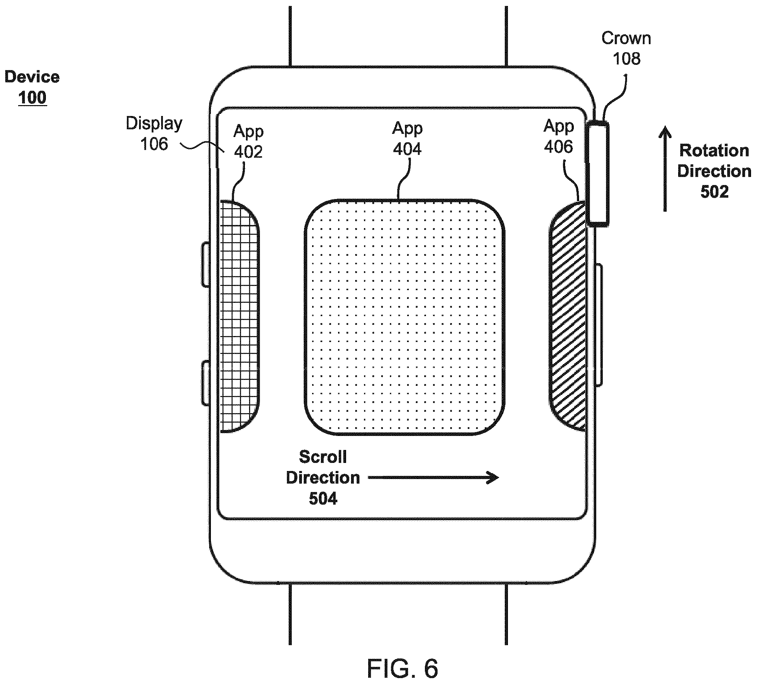

Referring now to FIG. 5, crown 108 is being rotated in the upward direction as indicated by rotation direction 502. Processor 202 can again receive crown position information that reflects this rotation from encoder 204 at block 302 of process 300. Thus, processor 202 can make a positive determination at block 304, causing the process to proceed to block 306. At block 306, processor 202 can cause display 106 to scroll through at least a portion of the set of applications on device 100. The scrolling can have a scroll direction 504 corresponding to the rotation direction 502 of crown 108 and a scroll amount or speed based on a characteristic (e.g., distance, velocity, acceleration, or the like) of the rotation of crown 108. In the illustrated example, the scroll distance can be proportional to the amount of rotation of crown 108. As shown, display 106 can scroll through the set of applications by causing the visual representations of the applications to translate in scroll direction 504. As a result, application 408 has been completely removed from display 106, a portion of application 406 has been removed from display 106, and a greater portion of application 404 is displayed on display 106. As the user continues to rotate crown 108 in rotation direction 502, processor 202 can continue to cause display 106 to scroll the view of the set of applications in scroll direction 504, as shown in FIG. 6. In FIG. 6, application 406 is barely visible on the right side of display 106, application 404 is centered within display 106, and a newly displayed application 402 is displayed on the left side of display 106. In this example, application 402 can be another application within the set of applications and can have an ordered position to the left or previous to application 404. In some examples, if application 402 is the first application in the list of applications and the user continues to rotate crown 108 in rotation direction 502, processor 202 can limit the scrolling of display 106 to stop scrolling once application 402 is centered within the display. Alternatively, in other examples, processor 202 can continue the scrolling of display 106 by looping to the end of the set of applications to cause the last application (e.g., application 408) of the set of applications to be displayed to the left of application 402.

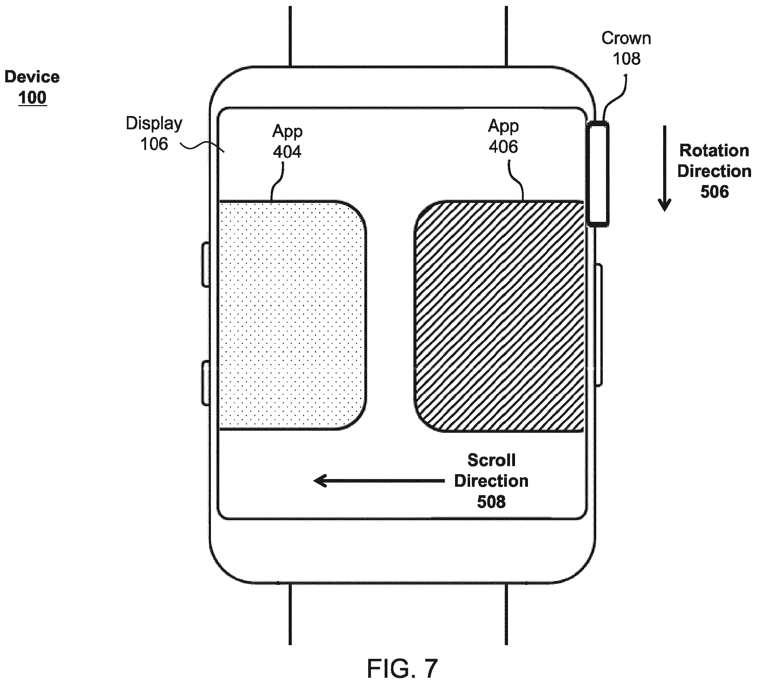

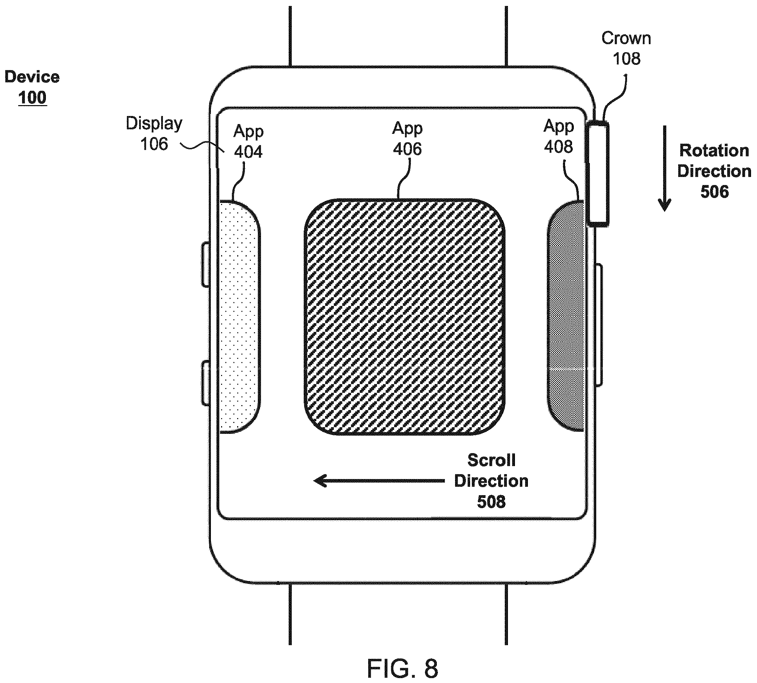

Referring now to FIG. 7, crown 108 is being rotated in the downward rotation direction 506. Processor 202 can again receive crown position information that reflects this rotation from encoder 204 at block 302 of process 300. Thus, processor 202 can make a positive determination at block 304, causing the process to proceed to block 306. At block 306, processor 202 can cause display 106 to scroll the view of applications in scroll direction 508 corresponding to rotation direction 506. In this example, scroll direction 508 is in the opposite direction of scroll direction 504. However, it should be appreciated that scroll direction 508 can be in any desired direction. Similar to the scrolling performed in response to rotation of crown 108 in rotation direction 502, the scrolling performed in response to the rotation of crown 108 in rotation direction 506 can depend on a characteristic (e.g., distance, velocity, acceleration, or the like) of the rotation of crown 108. In the illustrated example, the scroll distance can be proportional to the amount of rotation of crown 108. As shown, display 106 can scroll through the set of applications by causing the visual representations of the applications to translate in scroll direction 508. As a result, application 402 has been completely removed from display 106, a portion of application 404 has been removed from display 106, and a greater portion of application 406 is displayed on display 106. As the user continues to rotate crown 108 in rotation direction 506, processor 202 can continue to cause display 106 to scroll the view of the set of applications in scroll direction 508, as shown in FIG. 8. In FIG.8, application 404 is barely visible on the left side of display 106, application 406 is centered within display 106, and application 408 is again displayed on the right side of display 106. In some examples, if application 408 is the last application in the list of applications and the user were to continue to rotate crown 108 in rotation direction 508, processor 202 can limit the scrolling of display 106 to stop scrolling once application 408 is centered within the display. Alternatively, in other examples, processor 202 can continue the scrolling of display 106 by looping to the start of the set of applications to cause the first application (e.g., application 402) of the set of applications to be displayed to the right of application 408.

While a specific scrolling example is provided, it should be appreciated that other displays of applications can similarly be scrolled using a mechanical crown of a wearable electronic device in a similar manner. Additionally, the distance or speed of scrolling can be configured to depend on any characteristic of the crown.

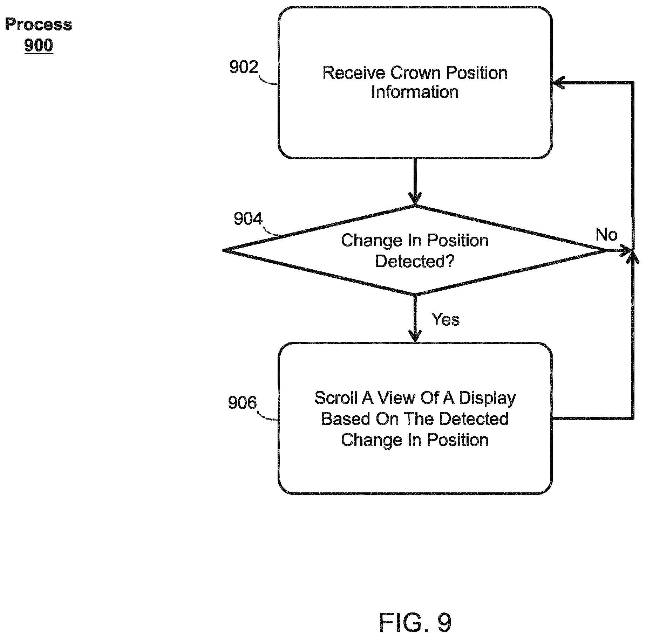

FIG. 9 illustrates an exemplary process 900 for scrolling a view of a display using a crown according to various examples. The view can include a visual representation of any type of data being displayed. For example, the view can include a display of a text, a media item, a webpage, a map, or the like. Process 900 can be similar to process 300, except that it can be more generally applied to any type of content or view being displayed on the display of a device. In some examples, process 900 can be performed by a wearable electronic device similar to device 100. In these examples, content or any other view can be displayed on display 106 of device 100 and process 900 can be performed to visually scroll the view in response to a turning of crown 108. In some examples, the scrolling can be performed by translating the displayed contents along a fixed axis.

At block 902, crown position information can be received in a manner similar or identical to that described above with respect to block 302. For instance, the crown position information can be received by a processor (e.g., processor 202) from an encoder (e.g., encoder 204) and can include an analog or digital representation of the absolute position of the crown, a change in rotational position of the crown, or other positional information of the crown.

At block 904, it can be determined if a change in position has been detected in a manner similar or identical to that described above with respect to block 304. For instance, block 904 can include comparing the position of the crown at two different instances in time, or can include determining if an absolute value of a change in crown position is equal to zero or below a threshold value. If no change in position is detected, the process can return to block 902. Alternatively, if a change in position is detected, the process can proceed to block 906. As described herein, a positive determination at block 904 can cause the process to proceed to block 906, while a negative determination can cause the process to return to block 902. However, it should be appreciated that the determination performed at block 904 can be reversed such that a positive determination can cause the process to return to block 902, while a negative determination can cause the process to proceed to block 906. For example, block 904 can alternatively determine if no change in position is detected.

At block 906, a view of a display can be scrolled based on the detected change in position. Similar to block 306 of process 300, block 906 can include visually scrolling a view by translating the view of the display in response to the detected change in position of the crown. For example, the display (e.g., display 106) can be displaying a portion of some content. In response to detecting a change in position of the crown (e.g., crown 108), the currently displayed portion of the content can be translated off the display to make room for other portions of the content that were not previously displayed. The direction of the translation can depend on the direction of the change in position of the crown. For example, turning the crown clockwise can cause a scrolling of the display in one direction, while turning the crown counter-clockwise can cause a scrolling of the display in a second (e.g., opposite) direction. Additionally, the distance or speed of scrolling can depend on the amount of detected change in the position of the crown. In some examples, the distance or speed of the scrolling can be proportional to the amount of detected rotation. For instance, the amount of scroll corresponding to a half-turn of the crown can be equal to 50% of the amount of scroll corresponding to a full turn of the crown. The process can then return to block 902 where new crown position information can be received.

It should be appreciated that the actual values used to linearly map the change in crown position to the distance or speed of scrolling can be varied depending on the desired functionality of the device. Moreover, it should be appreciated that other mappings between the scroll amount and change in position can be used. For example, acceleration, velocity (described in greater detail below with respect to FIGs. 21-44), or the like, can be used to determine the distance or speed of scrolling. Additionally, non-linear mappings between the crown characteristic (e.g., position, velocity, acceleration, etc.) and the scroll amount or scroll speed can be used.

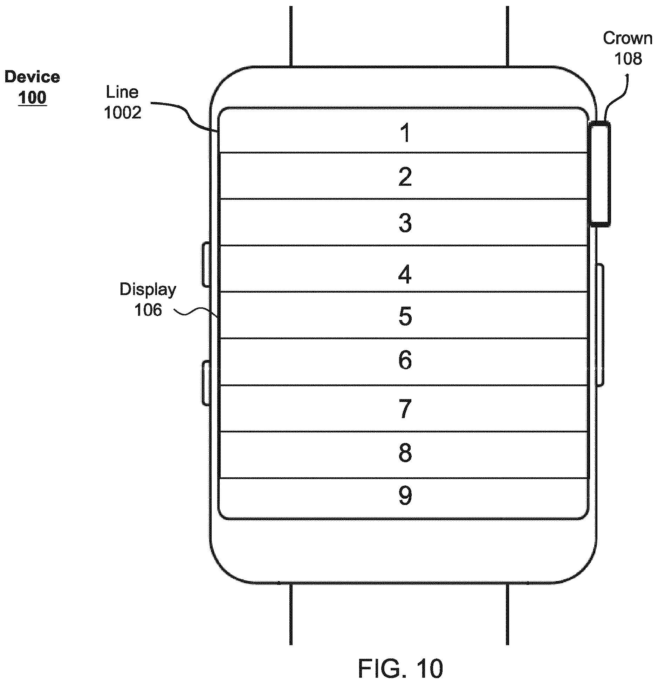

To further illustrate the operation of process 900, FIG. 10 depicts an example interface of device 100 having a visual representation of lines of text containing numbers 1-9. At block 902 of process 900, processor 202 of device 100 can receive crown position information from encoder 204. Since crown 108 is not being rotated in FIG. 10, a negative determination can be made by processor 202 at block 904, causing the process to return to block 902.

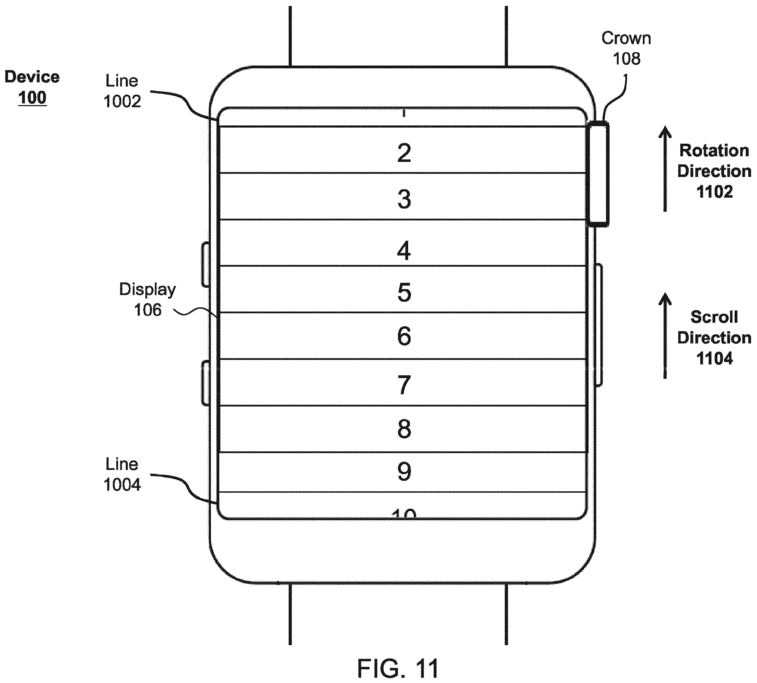

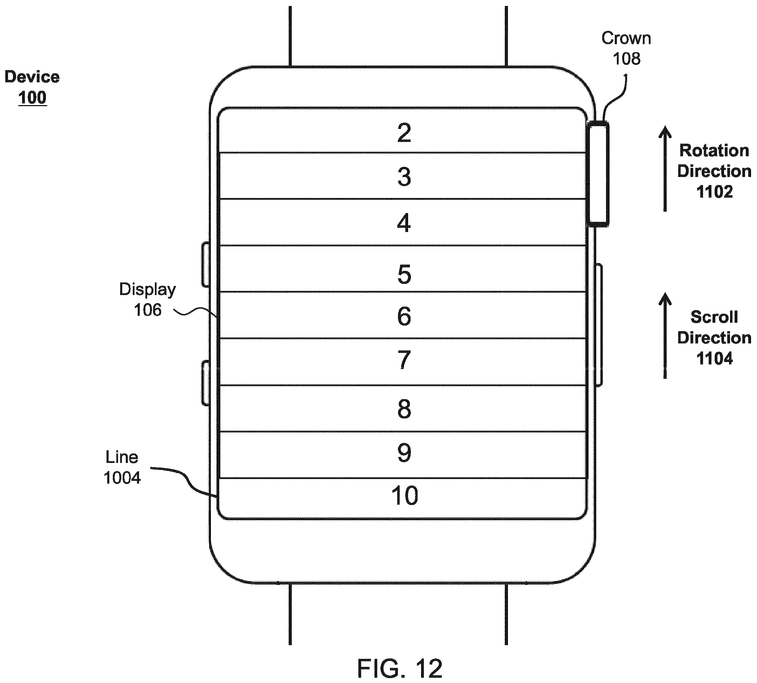

Referring now to FIG. 11, crown 108 is being rotated in the upward rotation direction 1102. Processor 202 can again receive crown position information that reflects this rotation from encoder 204 at block 902 of process 900. Thus, processor 202 can make a positive determination at block 904, causing the process to proceed to block 906. At block 906, processor 202 can cause display 106 to scroll through the lines of text being displayed on display 106. The scrolling can have a scroll direction 1104 corresponding to the rotation direction 1102 of crown 108 and a scroll amount or speed based on a characteristic (e.g., distance, velocity, acceleration, or the like) of the rotation of crown 108. In the illustrated example, the scroll distance can be proportional to the amount of rotation of crown 108. As shown, display 106 can scroll through the lines of text by causing the text to translate in scroll direction 1104. As a result, a portion of line 1002 has been removed from display 106, while a portion of line 1004 is newly displayed on the bottom of display 106. The lines of text between lines 1002 and 1004 have similarly been translated in scroll direction 1104. As the user continues to rotate crown 108 in rotation direction 1102, processor 202 can continue to cause display 106 to scroll the lines of text in scroll direction 1104, as shown in FIG. 12. In FIG. 12, line 1002 is no longer visible within display 106 and line 1004 is now completely in view of display 106. In some examples, if line 1004 is the last line of text and the user continues to rotate crown 108 in rotation direction 1102, processor 202 can limit the scrolling of display 106 to stop scrolling once line 1004 is fully displayed within display 106. In other examples, processor 202 can continue the scrolling of display 106 by looping to the start of the lines of text to cause the first line of text (e.g., line 1002) to be displayed below line 1004. In yet other examples, a rubberbanding effect can be performed by displaying a blank space below line 1004, and snapping the lines of text back to align line 1004 with the bottom of display 106 in response to a stop in rotation of crown 108. It should be appreciated that the action performed in response to reaching the end of content displayed within display 106 can be selected based on the type of data being displayed.

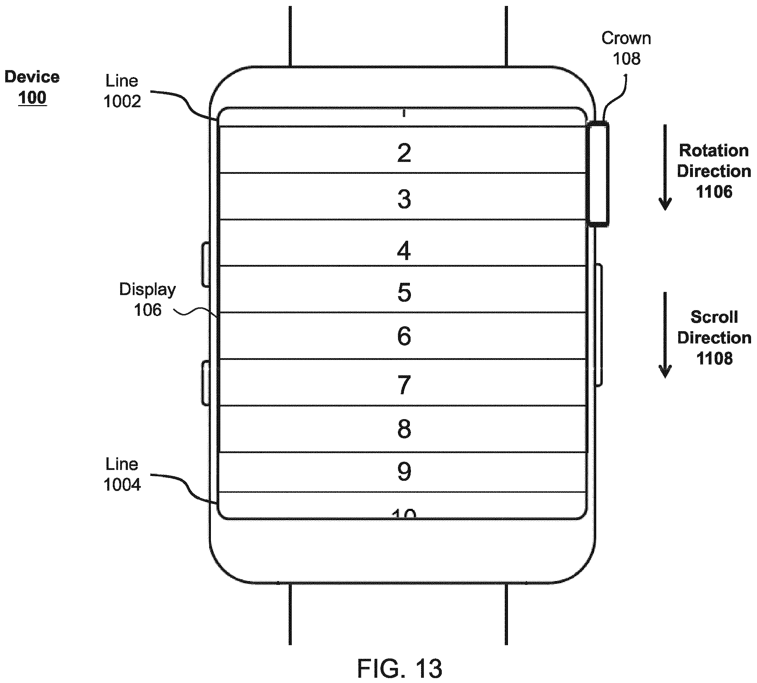

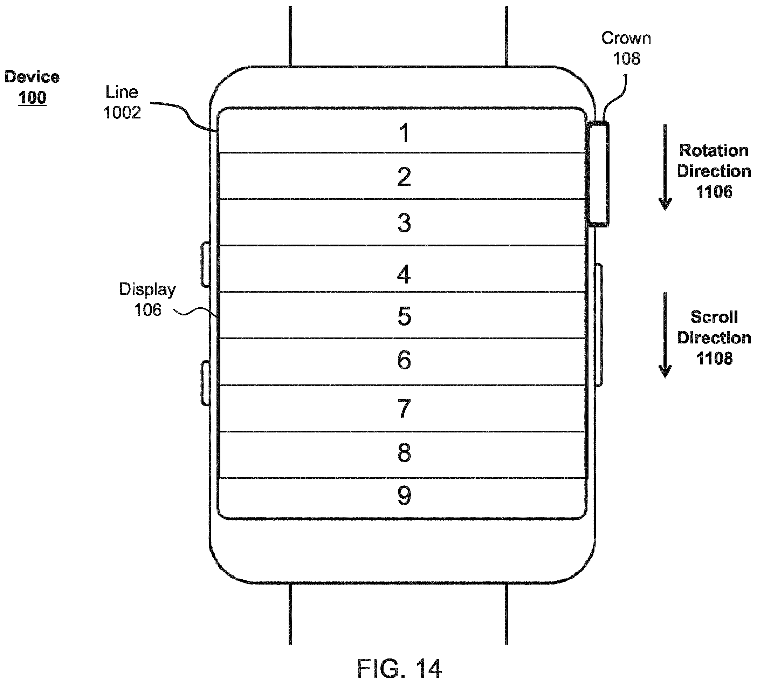

Referring now to FIG. 13, crown 108 is being rotated in the downward rotation direction 1106. Processor 202 can again receive crown position information that reflects this rotation from encoder 204 at block 902 of process 900. Thus, processor 202 can make a positive determination at block 904, causing the process to proceed to block 906. At block 906, processor 202 can cause display 106 to scroll the lines of text in scroll direction 1108 corresponding to rotation direction 1106. In this example, scroll direction 1108 is in the opposite direction of scroll direction 1104. However, it should be appreciated that scroll direction 1108 can be in any desired direction. Similar to the scrolling performed in response to rotation of crown 108 in rotation direction 1102, the scrolling performed in response to the rotation of crown 108 in rotation direction 1106 can depend on a characteristic (e.g., distance, velocity, acceleration, or the like) of the rotation of crown 108. In the illustrated example, the scroll distance can be proportional to the amount of rotation of crown 108. As shown, display 106 can scroll through the lines of text by causing the lines of text to translate in scroll direction 1108. As a result, a portion of line 1004 can be removed from display 106, while a portion of line 1002 can again be displayed at the top of display 106. As the user continues to rotate crown 108 in rotation direction 1106, processor 202 can continue to cause display 106 to scroll the lines of text in scroll direction 1108, as shown in FIG. 14. As shown in FIG. 14, line 1004 has been translated off of display 106, while line 1002 is now fully visible. In some examples, if line 1002 is the first line of text and the user continues to rotate crown 108 in rotation direction 1106, processor 202 can limit the scrolling of display 106 to stop scrolling once line 1002 is at the top of display 106. In other examples, processor 202 can continue the scrolling of display 106 by looping to the end of the lines of text to cause the last line of text (e.g., line 1004) to be displayed above line 1002. In yet other examples, a rubberbanding effect can be performed by displaying a blank space above line 1002, and snapping the lines of text back to align line 1002 with the top of display 106 in response to a stop in rotation of crown 108. It should be appreciated that the action performed in response to reaching the end of content displayed within display 106 can be selected based on the type of data being displayed.

While a specific scrolling example is provided, it should be appreciated that other types of data, such as media items, webpages, or the like, can similarly be scrolled using a mechanical crown of a wearable electronic device in a similar manner. Additionally, the distance or speed of scrolling can be configured to depend on any characteristic of the crown.

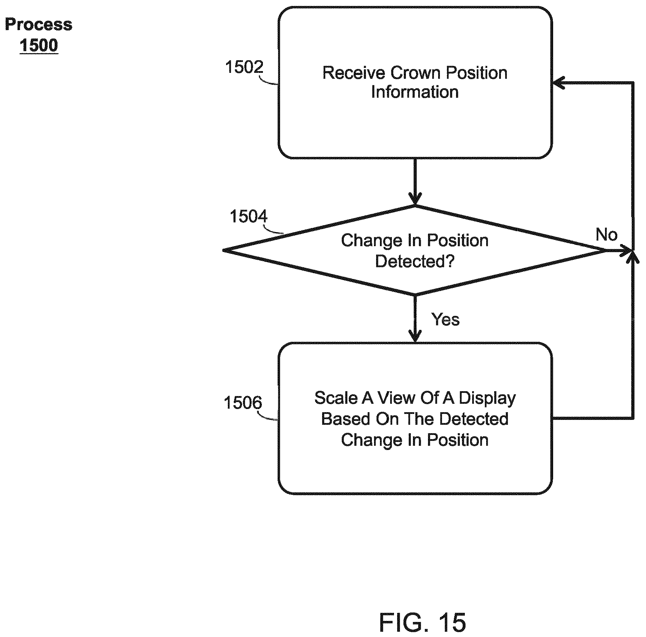

FIG. 15 illustrates an exemplary process 1500 for scaling a view (e.g., zooming in or out) of a display using a crown according to various examples. The view can include a visual representation of any type of data being displayed. For example, the view can include a display of a text, a media item, a webpage, a map, or the like. Process 1500 can be similar to processes 300 and 900, except that instead of scrolling between applications or scrolling a view of a device, the view can be scaled positively or negatively in response to rotation of the crown. In some examples, process 1500 can be performed by a wearable electronic device similar to device 100. In these examples, content or any other view can be displayed on display 106 of device 100 and process 1500 can be performed to visually scale the view in response to a turning of crown 108.

At block 1502, crown position information can be received in a manner similar or identical to that described above with respect to block 302 or 902. For instance, the crown position information can be received by a processor (e.g., processor 202) from an encoder (e.g., encoder 204) and can include an analog or digital representation of the absolute position of the crown, a change in rotational position of the crown, or other positional information of the crown.

At block 1504, it can be determined if a change in position has been detected in a manner similar or identical to that described above with respect to block 304 or 904. For instance, block 1504 can include comparing the position of the crown at two different instances in time, or can include determining if an absolute value of a change in crown position is equal to zero or below a threshold value. If no change in position is detected, the process can return to block 1502. Alternatively, if a change in position is detected, the process can proceed to block 1506. As described herein, a positive determination at block 1504 can cause the process to proceed to block 1506, while a negative determination can cause the process to return to block 1502. However, it should be appreciated that the determination performed at block 1504 can be reversed such that a positive determination can cause the process to return to block 1502, while a negative determination can cause the process to proceed to block 1506. For example, block 1504 can alternatively determine if no change in position is detected.

At block 1506, a view of a display can be scaled based on the detected change in position. Block 1506 can include visually scaling a view (e.g., zooming in/out) in response to the detected change in position of the crown. For example, the display (e.g., display 106) can be displaying a portion of some content. In response to detecting a change in position of the crown (e.g., crown 108), the view can be scaled by increasing or decreasing the size of the currently displayed portion of the content in the view depending on the direction of the change in position of the crown. For example, turning the crown clockwise can cause the contents within a view of the display to increase in size (e.g., zooming in), while turning the crown counter-clockwise can cause the contents within the view of the display to decrease in size (e.g., zooming out). Additionally, the amount or speed of scaling can depend on the amount of detected change in the position of the crown. In some examples, the amount or speed of the scaling can be proportional to the amount of detected rotation of the crown. For instance, the amount of scaling corresponding to a half-turn of the crown can be equal to 50% of the amount of scaling corresponding to a full turn of the crown. The process can then return to block 1502 where new crown position information can be received.

It should be appreciated that the actual values used to linearly map the change in crown position to the amount or speed of scaling can be varied depending on the desired functionality of the device. Moreover, it should be appreciated that other mappings between the scale amount and change in position can be used. For example, acceleration, velocity (described in greater detail below with respect to FIGs. 21-44), or the like, can be used to determine the amount or speed of scaling. Additionally, non-linear mappings between the crown characteristic (e.g., position, velocity, acceleration, etc.) and the scale amount or scale speed can be used.

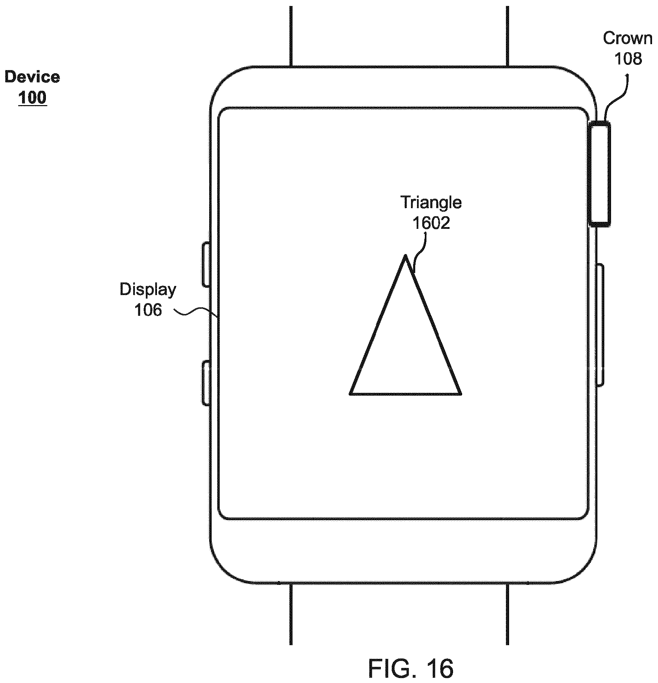

To further illustrate the operation of process 1500, FIG. 16 depicts an example interface of device 100 showing a triangle 1602. At block 1502 of process 1500, processor 202 of device 100 can receive crown position information from encoder 204. Since crown 108 is not being rotated in FIG. 16, a negative determination can be made by processor 202 at block 1504, causing the process to return to block 1502.

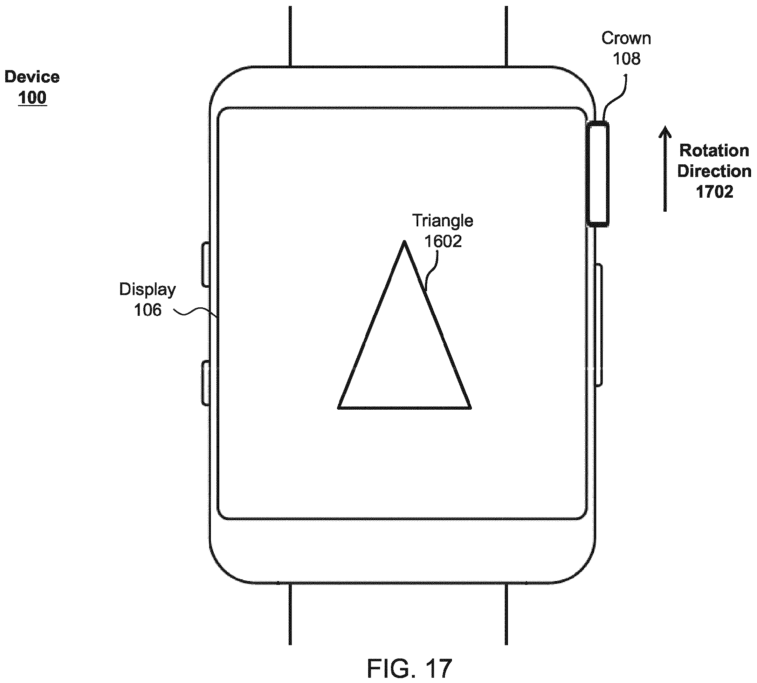

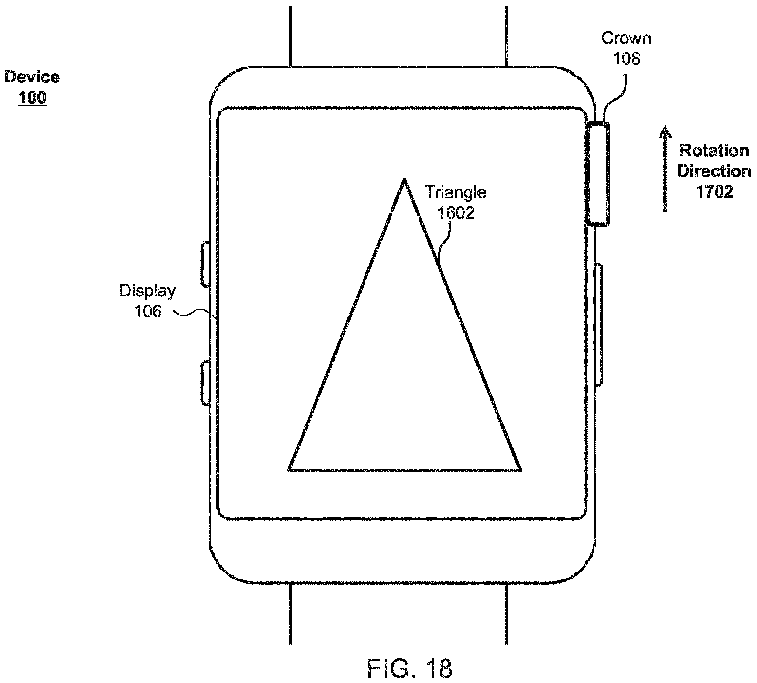

Referring now to FIG. 17, crown 108 is being rotated in the upward rotation direction 1702. Processor 202 can again receive crown position information that reflects this rotation from encoder 204 at block 1502 of process 1500. Thus, processor 202 can make a positive determination at block 1504, causing the process to proceed to block 1506. At block 1506, processor 202 can cause display 106 to scale the view being displayed on display 106. The scaling can increase or decrease the size of the view depending on the rotation direction of crown 108 and can have a scale amount or speed based on a characteristic (e.g., distance, velocity, acceleration, or the like) of the rotation of crown 108. In the illustrated example, the scale amount can be proportional to the amount of rotation of crown 108. As shown, display 106 can scale the view containing triangle 1602 using a positive scaling factor. As a result, triangle 1602 in FIG. 17 appears larger than that shown in FIG. 16. As the user continues to rotate crown 108 in rotation direction 1702, processor 202 can continue to cause display 106 to scaling the view containing the image of triangle 1602 using a positive scaling factor, as shown in FIG. 18. In FIG. 18, triangle 1602 appears larger than those shown in FIGS. 16 and 17. When the rotation of crown 108 stops, the scaling of the view containing triangle 1602 can similarly stop. In some examples, if the view of triangle 1602 has been scaled to its maximum amount and the user continues to rotate crown 108 in rotation direction 1702, processor 202 can limit the scaling of display 106. In yet other examples, a rubberbanding effect can be performed by allowing the view containing triangle 1602 to increase in size to a rubberbanding limit that is greater than the maximum scaling amount for the view and then snapping the size of the view back to its maximum scaling amount in response to a stop in rotation of crown 108. It should be appreciated that the action performed in response to reaching the scaling limit of display 106 can be configured in any desired manner.

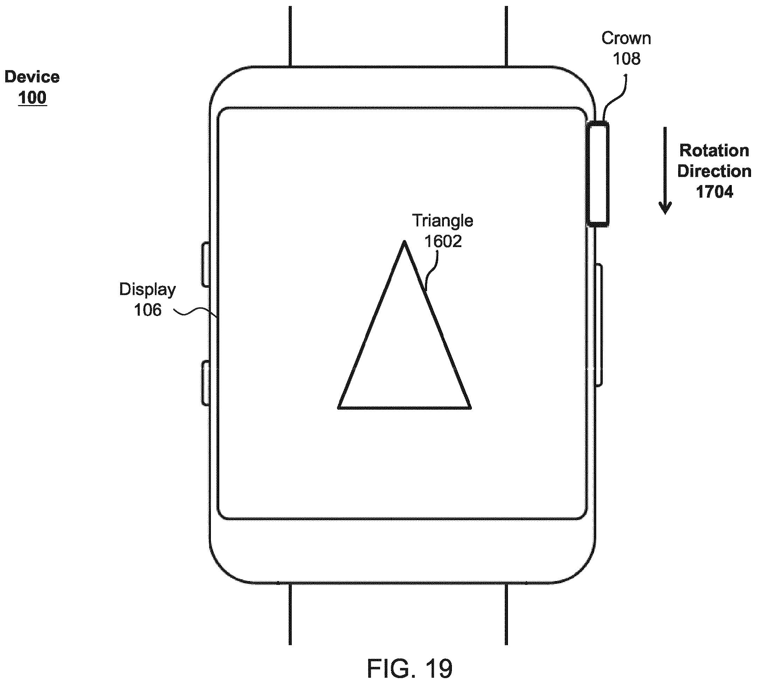

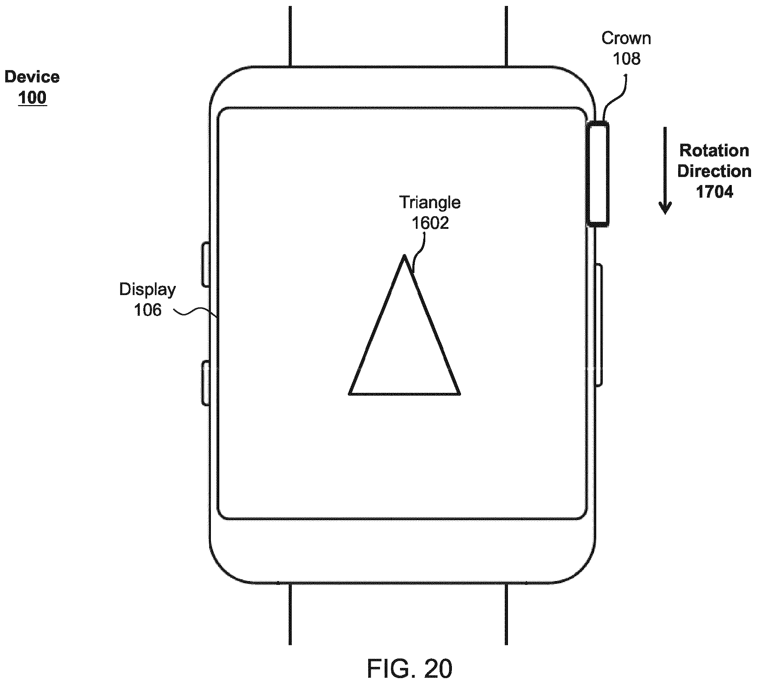

Referring now to FIG. 19, crown 108 is being rotated in the downward rotation direction 1704. Processor 202 can again receive crown position information that reflects this rotation from encoder 204 at block 1502 of process 1500. Thus, processor 202 can make a positive determination at block 1504, causing the process to proceed to block 1506. At block 1506, processor 202 can cause display 106 to scale the view using a negative scaling factor corresponding to rotation direction 1704. Similar to the scaling performed in response to rotation of crown 108 in rotation direction 1702, the scaling performed in response to the rotation of crown 108 in rotation direction 1704 can depend on a characteristic (e.g., distance, velocity, acceleration, or the like) of the rotation of crown 108. In the illustrated example, the scaling amount can be proportional to the amount of rotation of crown 108. As shown, display 106 can scale the view containing the image of triangle 1602 using a negative scaling factor. As a result, triangle 1602 in FIG. 19 is smaller than that shown in FIG. 18. As the user continues to rotate crown 108 in rotation direction 1704, processor 202 can continue to cause display 106 to scale the view of containing image of triangle 1602 using a negative scaling factor, as shown in FIG. 20. In FIG.20, triangle 1602 is smaller than those shown in FIGs. 18 and 19. When the rotation of crown 108 stops, the scaling of the view containing triangle 1602 can similarly stop. In some examples, if the view containing triangle 1602 has been scaled to its minimum amount and the user continues to rotate crown 108 in rotation direction 1704, processor 202 can limit the scaling of display 106. In yet other examples, a rubberbanding effect can be performed by allowing the view containing triangle 1602 to decrease in size to a rubberbanding limit that is less than the minimum scaling amount for the view, and then snapping the size of the view back to its minimum scaling amount in response to a stop in rotation of crown 108. It should be appreciated that the action performed in response to reaching the scaling limit of display 106 can be configured in any desired manner.

While a specific scaling example is provided, it should be appreciated that views of other types of data, such as media items, webpages, or the like, can similarly be scaled using a mechanical crown of a wearable electronic device in a similar manner. Additionally, the amount or speed of scaling can be configured to depend on any characteristic of the crown. Moreover, in some examples, when reaching a minimum or maximum scaling of a view, continued rotation of the crown in the same direction can cause the scaling to reverse direction. For example, an upward rotation of the crown can cause a view to zoom-in. However, upon reaching a scaling limit, the upward rotation of the crown can then cause the view to scale in the opposite direction (e.g., zoom-out).

FIG. 21 illustrates an exemplary process 2100 for scrolling a view of a display based on an angular velocity of rotation of a crown according to various examples. The view can include a visual representation of any type of data being displayed. For example, the view can include a display of a text, a media item, a webpage, or the like. Process 2100 can be similar to process 900, except that it can scroll the view based on a scrolling velocity that depends on the angular velocity of rotation of the crown. In some examples, process 2100 can be performed by a wearable electronic device similar to device 100. In these examples, content or any other view can be displayed on display 106 of device 100 and process 2100 can be performed to visually scroll the view in response to a turning of crown 108. In some examples, the scrolling can be performed by translating the displayed contents along a fixed axis.

At block 2102, a view of the display of the wearable electronic device can be displayed. As mentioned above, the view can include any visual representation of any type of data that is displayed by a display of the device.

At block 2104, crown position information can be received in a manner similar or identical to that described above with respect to block 902 of process 900. For instance, the crown position information can be received by a processor (e.g., processor 202) from an encoder (e.g., encoder 204) and can include an analog or digital representation of the absolute position of the crown, a change in rotational position of the crown, or other positional information of the crown.

At block 2106, the scroll velocity (e.g., speed and scroll direction) can be determined. In some examples, the scrolling of a view can be determined using a physics-based modeling of the motion. For example, the view can be treated as an object having a movement velocity that corresponds to the velocity of scrolling across the display of the device. The rotation of the crown can be treated as a force being applied to the view in a direction corresponding to the direction of rotation of the crown, where the amount of force depends on the speed of angular rotation of the crown. For example, a greater speed of angular rotation can correspond to a greater amount of force being applied to the view. Any desired linear or non-linear mapping between the speed of angular rotation of the crown and the force being applied to the view can be used. In addition, a drag force can be applied in a direction opposite the direction of scroll. This can be used to cause the velocity of scrolling to decay over time, allowing the scrolling to stop absent additional input from the user. Thus, the velocity of scrolling at discrete moments in time can take the general form of:

$$V_T = V_{(T-1)} + \Delta V_{CROWN} - \Delta V_{DRAG}. \hspace{2cm} (1.1)$$

In equation 1.1, $V_T$ represents the determined scroll velocity (speed and direction) at time T, $V_{(T-1)}$ represents the previous scroll velocity (speed and direction) at time T-1, $\Delta V_{CROWN}$ represents the change in velocity caused by the force applied to the view in response to the rotation of the crown, and $\Delta V_{DRAG}$ represents the change in velocity of the view caused by the drag force opposing the motion of the view (scrolling of the view). As mentioned above, the force applied to the view by the crown can depend on the speed of angular rotation of the crown. Thus, $\Delta V_{CROWN}$ can also depend on the speed of angular rotation of the crown. Typically, the greater the speed of angular rotation of the crown, the greater the value of $\Delta V_{CROWN}$ will be. However, the actual mapping between the speed of angular rotation of the crown and $\Delta V_{CROWN}$ can be varied depending on the desired user feel of the scrolling effect. For example, various linear or non-linear mappings between the speed of angular rotation of the crown and $\Delta V_{CROWN}$ can be used. In some examples, $\Delta V_{DRAG}$ can depend on the velocity of scrolling such that at greater velocities, a greater opposing change in velocity can be produced. In other examples, $\Delta V_{DRAG}$ can have a constant value. However, it should be appreciated that any constant or variable amount of opposing change in velocity can be used to produce a desired scrolling effect. Note, typically, in the absence of user input in the form of $\Delta V_{CROWN}$, $V_T$ will approach (and become) zero based on $\Delta V_{DRAG}$ in accordance with equation 1.1, but $V_T$ would not change signs without user input in the form of crown rotation ($\Delta V_{CROWN}$).

As can be seen from equation 1.1, the velocity of scrolling can continue to increase as long as $\Delta V_{CROWN}$ is greater than $\Delta V_{DRAG}$. Additionally, the velocity of scrolling can have non-zero values even when no $\Delta V_{CROWN}$ input is being received. Thus, if the view is scrolling with a non-zero velocity, it can continue to scroll without the user rotating the crown. The scroll distance and time until the scrolling stops can depend on the scroll velocity at the time the user stops rotating the crown and the $\Delta V_{DRAG}$ component.

In some examples, when the crown is rotated in a direction corresponding to a scroll direction that is opposite the direction that the view is currently being scrolled, the $V_{(T-1)}$ component can be reset to a value of zero, allowing the user to quickly change the direction of the scrolling without having to provide a force sufficient to offset the current scroll velocity of the view.

At block 2108, the display can be updated based on the scroll speed and direction determined at block 2106. This can include translating the displayed view by an amount corresponding to the determined scroll speed and in a direction corresponding to the determined scroll direction. The process can then return to block 2104, where additional crown position information can be received.

It should be appreciated that blocks 2104, 2106, and 2108 can be repeatedly performed at any desired frequency to continually determine the velocity of scrolling and to update the display accordingly.

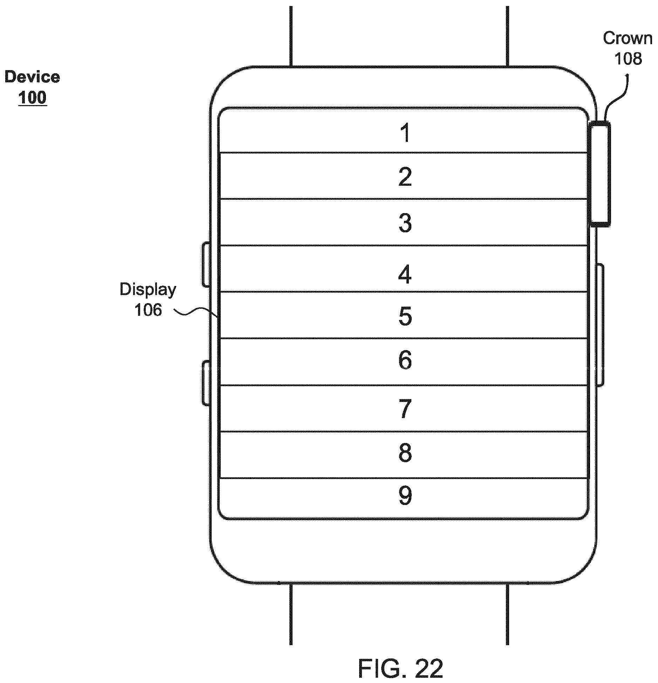

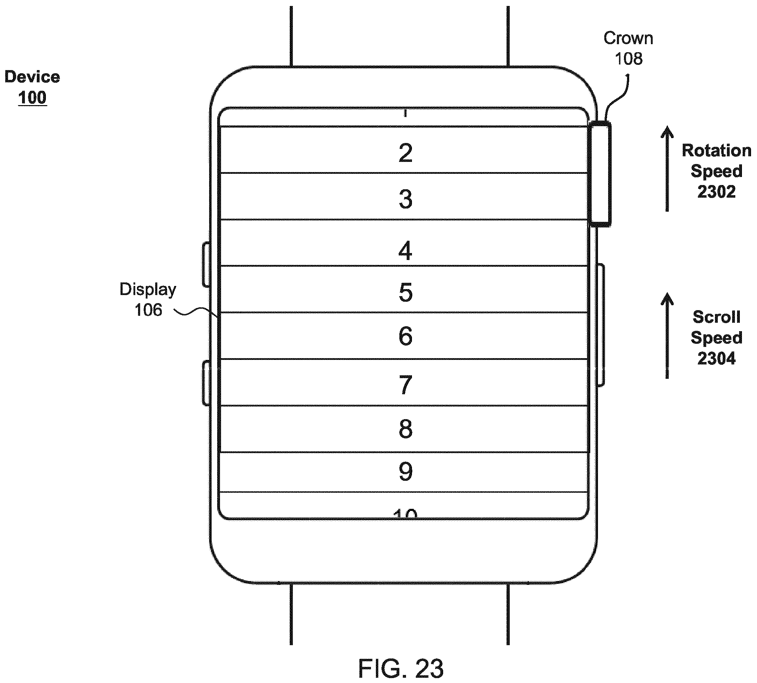

To further illustrate the operation of process 2100, FIG. 22 depicts an example interface of device 100 having a visual representation of lines of text containing numbers 1-9. At block 2102 of process 2100, processor 202 of device 100 can cause display 106 to display the illustrated interface. At block 2104, processor 202 can receive crown position information from encoder 204. At block 2106, a scroll speed and scroll direction can be determined. Since the current scroll speed is zero and since crown 108 is not currently being rotated, it can be determined using equation 1.1 that the new velocity of scrolling is zero. At block 2108, processor 202 can cause display 106 to update the display using the speed and direction determined at block 2106. However, since the determined velocity was zero, no change to the display need be made. For purposes of explanation, FIGs. 23-29 depict subsequent views of the interface shown T in FIG. 22 at different points of time, where the length of time between each view is equal.

Referring now to FIG. 23, crown 108 is being rotated in the upward rotation direction with rotation speed 2302. Processor 202 can again receive crown position information that reflects this rotation from encoder 204 at block 2104. Thus, at block 2106, processor 202 can convert this rotation speed into a $\Delta V_{CROWN}$ value to determine the new velocity of scrolling $V_T$. In this example, rotation of crown 108 in the upward direction corresponds to an upward scroll direction. In other examples, other directions can be used. At block 2108, processor 202 can cause display 106 to update the display based on the determined scroll speed and direction. As shown in FIG. 23, this update has caused the lines of text to translate in the upward direction with scroll speed 2304. Since crown 108 has only begun to rotate, rotation speed 2302 can be relatively low compared to typical rotation speeds of the crown. Thus, scroll speed 2304 can similarly have a relatively low value compared to typical or maximum scroll speeds. As a result, only a portion of the line of text containing the value "1" has been translated off the display.

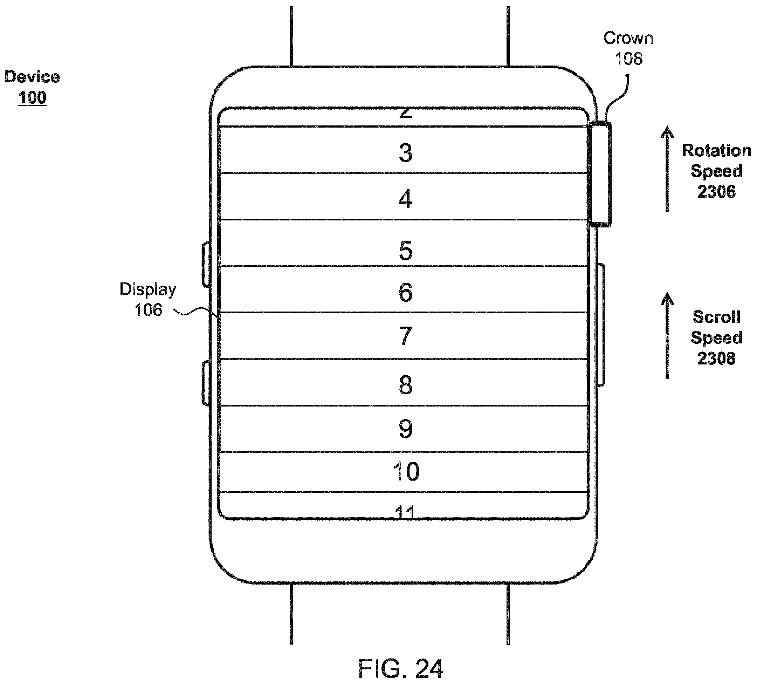

Referring now to FIG. 24, crown 108 is being rotated in the upward rotation direction with rotation speed 2306, which can be greater than rotation speed 2302. Processor 202 can again receive crown position information from encoder 204 at block 2104. Thus, at block 2106, processor 202 can convert this rotation speed into a $\Delta V_{CROWN}$ value to determine the new velocity of scrolling $V_T$. Since the display previously had a non-zero scroll speed value (e.g., as shown in FIG. 23), the new $\Delta V_{CROWN}$ value corresponding to rotation speed 2306 can be added to the previous scroll velocity value $V_{(T-1)}$ (e.g., having scroll speed 2304). Thus, as long as the new $\Delta V_{CROWN}$ value is greater than the $\Delta V_{DRAG}$ value, the new scroll speed 2308 can be greater than scroll speed 2304. However, if the $\Delta V_{CROWN}$ value corresponding to rotation speed 2306 is less than the $\Delta V_{DRAG}$ value, the new scroll speed 2308 can be less than scroll speed 2304. In the illustrated example, the new $\Delta V_{CROWN}$ value is assumed to be greater than the $\Delta V_{DRAG}$ value. At block 2108, processor 202 can cause display 106 to update the display based on the determined scroll speed and direction. As shown in FIG. 24, this update has caused the lines of text to translate in the upward direction with scroll speed 2308. Since the $\Delta V_{CROWN}$ value corresponding to rotation speed 2306 is greater than the $\Delta V_{DRAG}$ value, scroll speed 2308 can be greater than scroll speed 2304. As a result, the lines of text have been translated a greater distance over the same length of time, causing a full line of text to be translated vertically off the display.

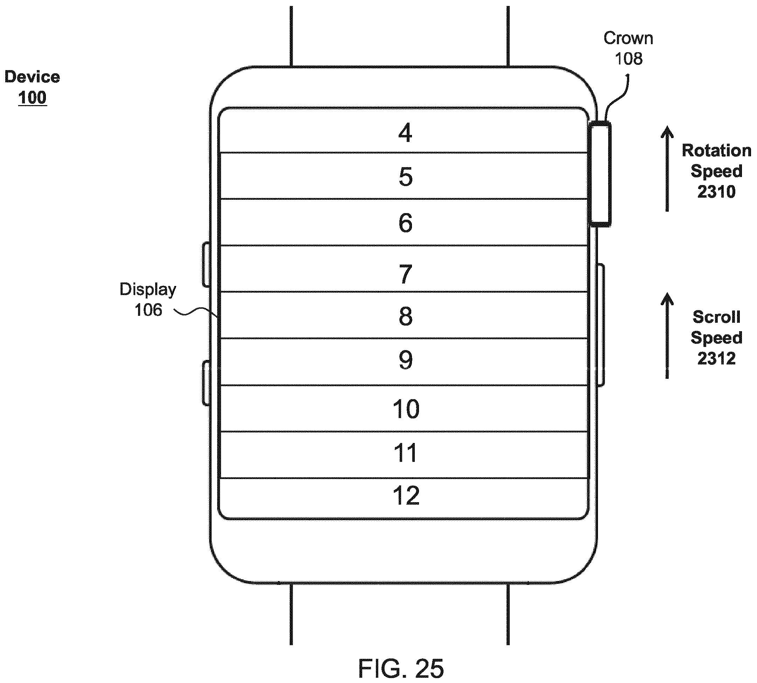

Referring now to FIG. 25, crown 108 is being rotated in the upward rotation direction with rotation speed 2310, which can be greater than rotation speed 2306. Processor 202 can again receive crown position information that reflects this rotation from encoder 204 at block 2104. Thus, at block 2106, processor 202 can convert this rotation speed into a $\Delta V_{CROWN}$ value to determine the new velocity of scrolling $V_T$. Since the display previously had a non-zero scroll speed value (e.g., as shown in FIG. 24), the new $\Delta V_{CROWN}$ value corresponding to rotation speed 2310 can be added to the previous scroll velocity value $V_{(T-1)}$ (e.g., having scroll speed 2308). Thus, as long as the new $\Delta V_{CROWN}$ value is greater than the $\Delta V_{DRAG}$ value, the new scroll speed 2312 can be greater than scroll speed 2308. However, if the $\Delta V_{CROWN}$ value corresponding to rotation speed 2310 is less than the $\Delta V_{DRAG}$ value, the new scroll speed 2312 can be less than scroll speed 2308. In the illustrated example, the new $\Delta V_{CROWN}$ value is assumed to be greater than the $\Delta V_{DRAG}$ value. At block 2108, processor 202 can cause display 106 to update the display based on the determined scroll speed and direction. As shown in FIG. 25, this update has caused the lines of text to translate in the upward direction with scroll speed 2312. Since the $\Delta V_{CROWN}$ value corresponding to rotation speed 2310 is greater than the $\Delta V_{DRAG}$ value, scroll speed 2312 can be greater than scroll speed 2308. As a result, the lines of text have been translated a greater distance over the same length of time, causing 1.5 lines of text to be translated vertically off the display.

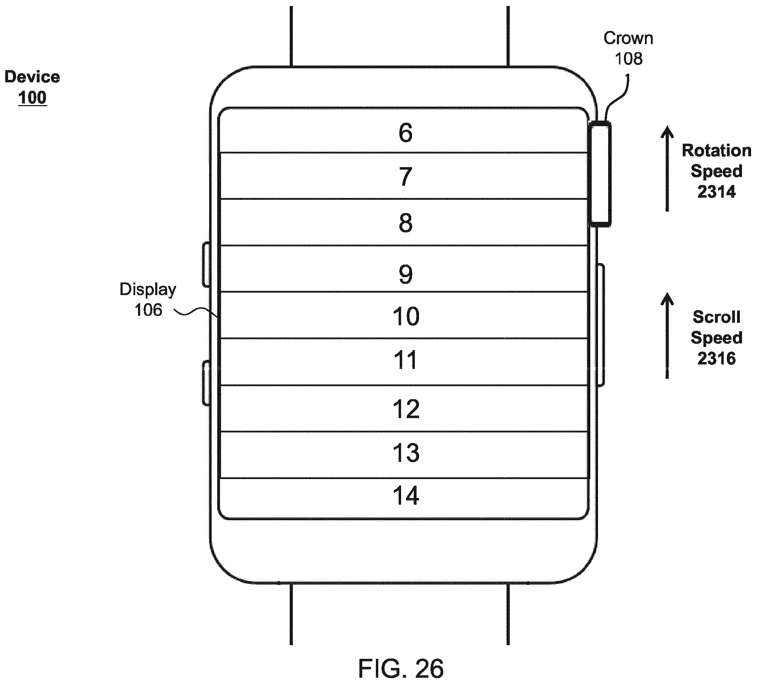

Referring now to FIG. 26, crown 108 is being rotated in the upward rotation direction with rotation speed 2314, which can be greater than rotation speed 2310. Processor 202 can again receive crown position information that reflects this rotation from encoder 204 at block 2104. Thus, at block 2110, processor 202 can convert this rotation speed into a $\Delta V_{CROWN}$ value to determine the new velocity of scrolling $V_T$. Since the display previously had a non-zero scroll speed value (e.g., as shown in FIG. 25), the new $\Delta V_{CROWN}$ value corresponding to rotation speed 2314 can be added to the previous scroll velocity value $V_{(T-1)}$ (e.g., having scroll speed 2312). Thus, as long as the new $\Delta V_{CROWN}$ value is greater than the $\Delta V_{DRAG}$ value, the new scroll speed 2316 can be greater than scroll speed 2312. However, if the $\Delta V_{CROWN}$ value corresponding to rotation speed 2314 is less than the $\Delta V_{DRAG}$ value, the new scroll speed 2316 can be less than scroll speed 2312. In the illustrated example, the new $\Delta V_{CROWN}$ value is assumed to be greater than the $\Delta V_{DRAG}$ value. At block 2108, processor 202 can cause display 106 to update the display based on the determined scroll speed and direction. As shown in FIG. 26, this update has caused the lines of text to translate in the upward direction with scroll speed 2316. Since the $\Delta V_{CROWN}$ value corresponding to rotation speed 2314 is greater than the $\Delta V_{DRAG}$ value, scroll speed 2316 can be greater than scroll speed 2312. As a result, the lines of text have been translated a greater distance over the same length of time, causing two lines of text to be translated vertically off the display.

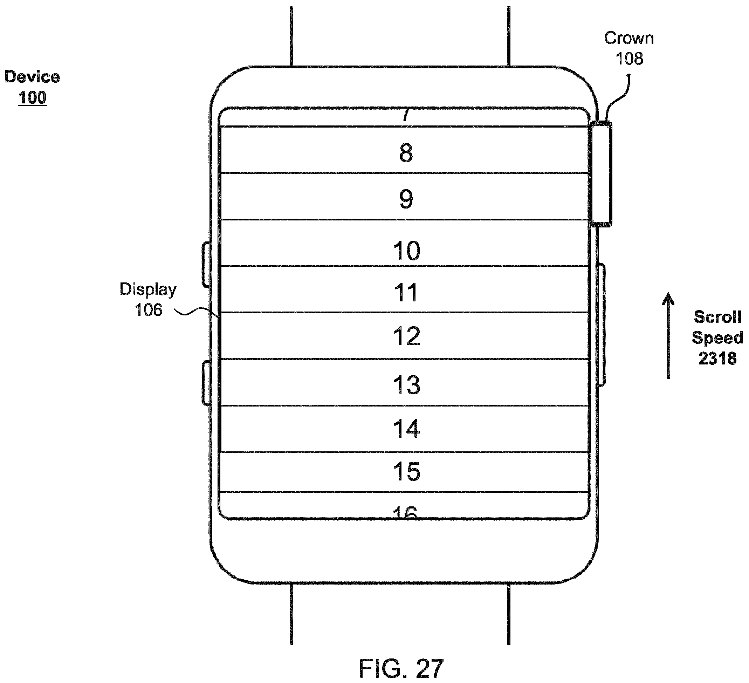

Referring now to FIG. 27, crown 108 is not being rotated in any direction. Processor 202 can again receive crown position information that reflects this rotation from encoder 204 at block 2104. Thus, at block 2110, processor 202 can determine the new velocity of scrolling $V_T$ based on the previous scroll velocity $V_{(T-1)}$ (e.g., having scroll speed 2316) and the $\Delta V_{DRAG}$ value. Thus, as long as the previous scroll speed 2316 is greater than the $\Delta V_{DRAG}$ value, the scroll speed can have a non-zero value even when no rotation of the crown is being performed. However, if the previous scroll velocity $V_{(T-1)}$ (e.g., having scroll speed 2316) is equal to the $\Delta V_{DRAG}$ value, the scroll speed can have a value of zero. In the illustrated example, the previous scroll velocity $V_{(T-1)}$ (e.g., having scroll speed 2316) is assumed to be greater than the $\Delta V_{DRAG}$ value. At block 2108, processor 202 can cause display 106 to update the display based on the determined scroll speed and direction. As shown in FIG. 27, this update has caused the lines of text to translate in the upward direction with scroll speed 2318. Since $\Delta V_{DRAG}$ can have a non-zero value and because the previous scroll velocity $V_{(T-1)}$ (e.g., having scroll speed 2316) can be greater than the $\Delta V_{DRAG}$ value, scroll speed 2318 can have a non-zero value that is less than scroll speed 2316. As a result, the lines of text have been translated a shorter distance over the same length of time, causing 1.5 lines of text to be translated vertically off the display.

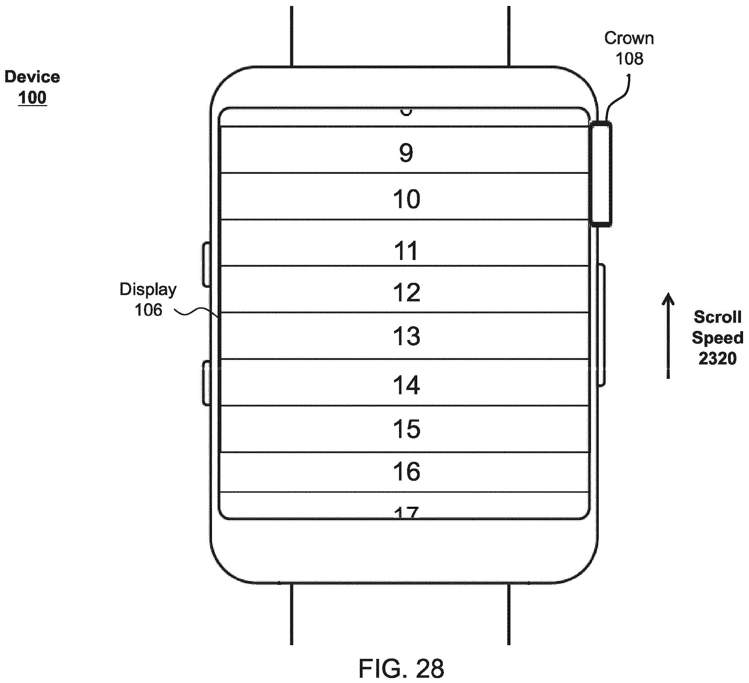

Referring now to FIG. 28, crown 108 is not being rotated in any direction. Processor 202 can again receive crown position information that reflects this rotation from encoder 204 at block 2104. Thus, at block 2110, processor 202 can determine the new velocity of scrolling $V_T$ based on the previous scroll velocity $V_{(T-1)}$ (e.g., having scroll speed 2318) and the $\Delta V_{DRAG}$ value. Thus, as long as the previous scroll speed 2318 is greater than the $\Delta V_{DRAG}$ value, the scroll speed can have a non-zero value even when no rotation of the crown is being performed. However, if the previous scroll velocity $V_{(T-1)}$ (e.g., having scroll speed 2318) is equal to the $\Delta V_{DRAG}$ value, the scroll speed can have a value of zero. In the illustrated example, the previous scroll velocity $V_{(T-1)}$ (e.g., having scroll speed 2318) is assumed to be greater than the $\Delta V_{DRAG}$ value. At block 2108, processor 202 can cause display 106 to update the display based on the determined scroll speed and direction. As shown in FIG. 28, this update has caused the lines of text to translate in the upward direction with scroll speed 2320. Since $\Delta V_{DRAG}$ can have a non-zero value and because the previous scroll velocity $V_{(T-1)}$ (e.g., having scroll speed 2318) can be greater than the $\Delta V_{DRAG}$ value, scroll speed 2320 can have a non-zero value that is less than scroll speed 2318. As a result, the lines of text have been translated a shorter distance over the same length of time, causing one line of text to be translated vertically off the display.

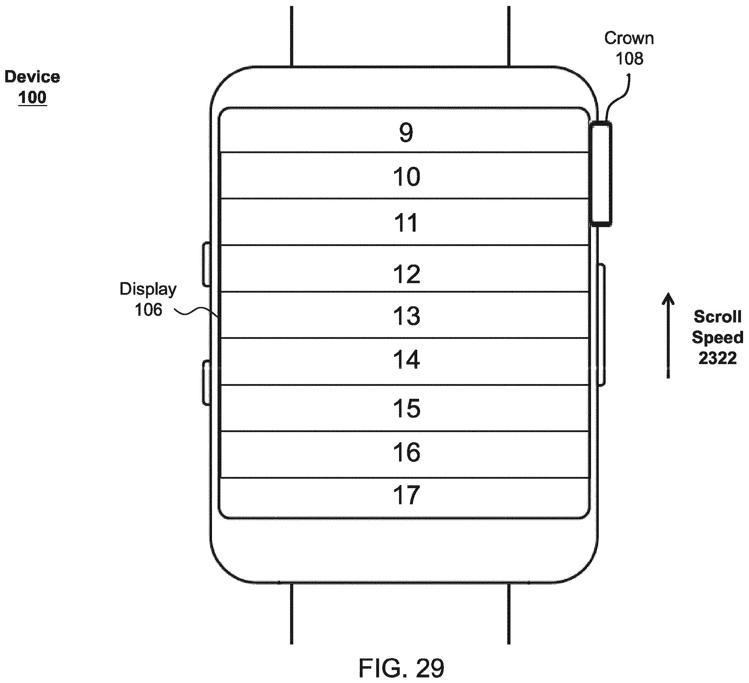

Referring now to FIG. 29, crown 108 is not being rotated in any direction. Processor 202 can again receive crown position information that reflects this rotation from encoder 204 at block 2104. Thus, at block 2110, processor 202 can determine the new velocity of scrolling $V_T$ based on the previous scroll velocity $V_{(T-1)}$ (e.g., having scroll speed 2320) and the $\Delta V_{DRAG}$ value. Thus, as long as the previous scroll speed 2320 is greater than the $\Delta V_{DRAG}$ value, the scroll speed can have a non-zero value even when no rotation of the crown is being performed. However, if the previous scroll velocity $V_{(T-1)}$ (e.g., having scroll speed 2320) is equal to the $\Delta V_{DRAG}$ value, the scroll speed can have a value of zero. In the illustrated example, the previous scroll velocity $V_{(T-1)}$ (e.g., having scroll speed 2320) is assumed to be greater than the $\Delta V_{DRAG}$ value. At block 2108, processor 202 can cause display 106 to update the display based on the determined scroll speed and direction. As shown in FIG. 29, this update has caused the lines of text to translate in the upward direction with scroll speed 2322. Since $\Delta V_{DRAG}$ can have a non-zero value and because the previous scroll velocity $V_{(T-1)}$ (e.g., having scroll speed 2320) can be greater than the $\Delta V_{DRAG}$ value, scroll speed 2322 can have a non-zero value that is less than scroll speed 2320. As a result, the lines of text have been translated a shorter distance over the same length of time, causing 0.5 lines of text to be translated vertically off the display. This decay in scroll velocity can continue until the previous scroll velocity $V_{(T-1)}$ is equal to the $\Delta V_{DRAG}$ value, causing the scroll velocity to fall to zero. Alternatively, the decay in scroll velocity can continue until the previous scroll velocity $V_{(T-1)}$ falls below a threshold value, after which it can be set to a value of zero.

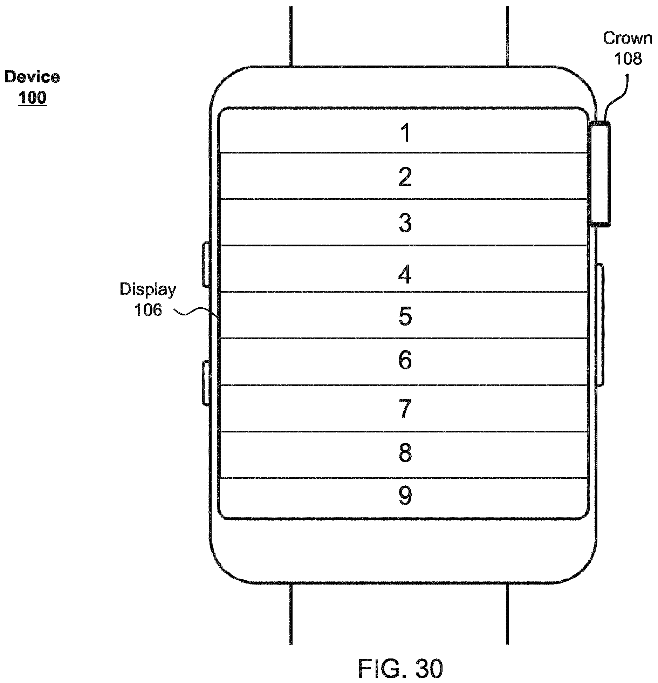

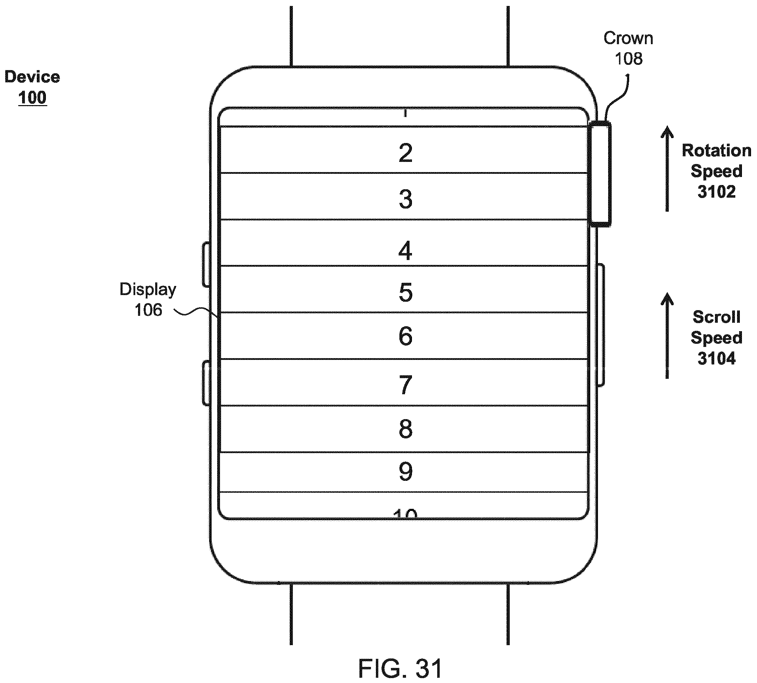

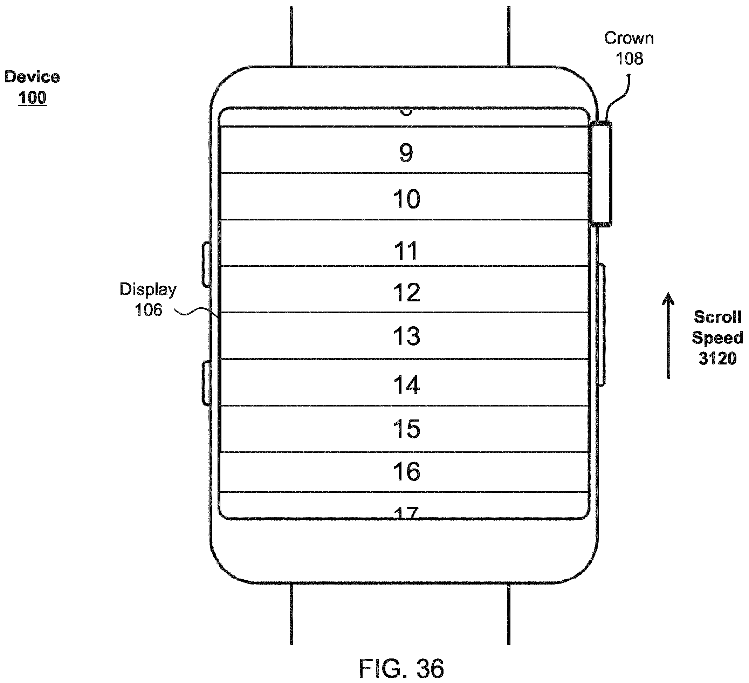

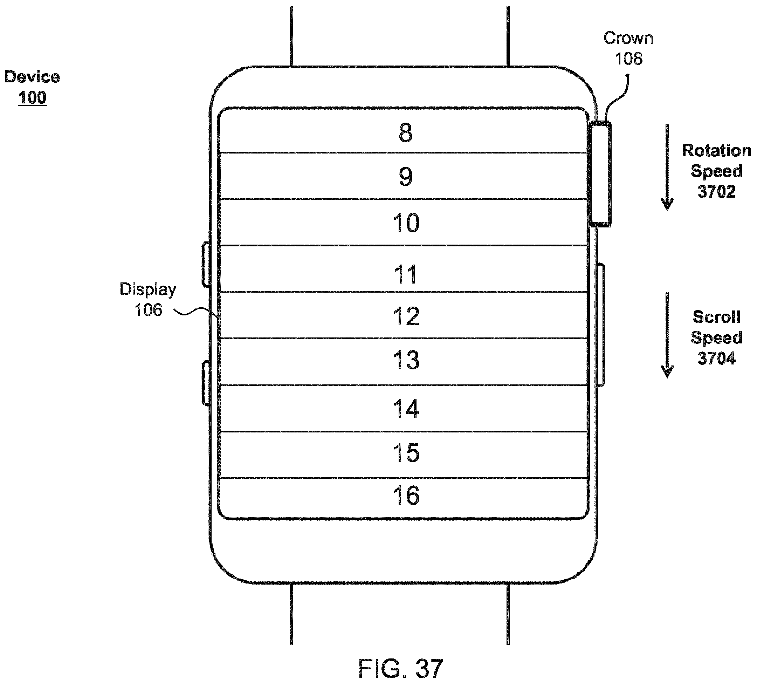

To further illustrate the operation of process 2100, FIG. 30 depicts an example interface of device 100 having a visual representation of lines of text containing numbers 1-9 similar to that shown in FIG. 22. FIGs. 31-36 illustrate the scrolling of the display at scroll speeds 3104, 3108, 3112, 3116, 3118, and 3120 based on input rotation speeds 3102, 3106, 3110, and 3114, in a similar manner as described above with respect to FIGs. 23-28. Thus, the lengths of time between subsequent views shown in FIGs. 31-36 are equal. For purposes of explanation, FIGs. 37-40 depict subsequent views of the interface shown in FIG. 36 at different points of time, where the length of time between each view is equal.

In contrast to FIG. 29 where no rotation input was received, a downward rotation having rotation speed 3702 can be performed at FIG. 37. In this instance, processor 202 can again receive crown position information from encoder 204 reflecting this downward rotation at block 2104. At block 2106, processor 202 can convert this rotation speed into a $\Delta V_{CROWN}$ value to determine the new velocity of scrolling $V_T$. Since the downward rotation of crown 108 is in the opposite direction of the scrolling shown in FIG. 36, the $\Delta V_{CROWN}$ value can have a polarity that is opposite that of the previous scroll velocity value $V_{(T-1)}$. In some examples, the new velocity of scrolling $V_T$ can be calculated by adding the new $\Delta V_{CROWN}$ value (having an opposite polarity) to the previous scroll velocity value $V_{(T-1)}$ and subtracting the $\Delta V_{DRAG}$ value. In other examples, such as that shown in FIG. 37, the previous scroll velocity value $V_{(T-1)}$ can be set to zero when rotation of crown 108 is in a direction opposite that of the previous scrolling (e.g., the polarity of $\Delta V_{CROWN}$ is opposite that of $V_{(T-1)}$). This can be performed to allow the user to quickly change the direction of scrolling without having to offset the previous velocity of scrolling. At block 2108, processor 202 can cause display 106 to update the display based on the determined scroll speed and direction. As shown in FIG. 37, this update has caused the lines of text to translate in the downward direction with scroll speed 3704. Since crown 108 has only begun to rotate, rotation speed 3702 can be relatively low compared to typical rotation speeds of the crown. Thus, scroll speed 3704 can similarly have a relatively low value compared to typical or maximum scroll speeds. As a result, a relatively slow scrolling can be performed, causing 0.5 lines of text to be translated vertically off the display.

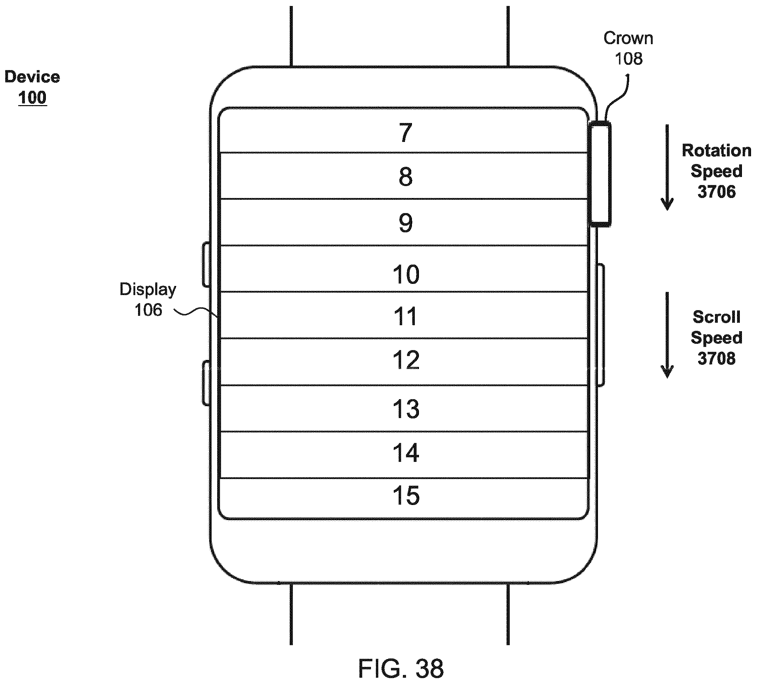

Referring now to FIG. 38, crown 108 is being rotated in the downward rotation direction with rotation speed 3706, which can be greater than rotation speed 3702. Processor 202 can again receive crown position information that reflects this rotation from encoder 204 at block 2104. Thus, at block 2106, processor 202 can convert this rotation speed into a $\Delta V_{CROWN}$ value to determine the new velocity of scrolling $V_T$. Since the display previously had a non-zero scroll speed value (e.g., as shown in FIG. 37), the new $\Delta V_{CROWN}$ value corresponding to rotation speed 3706 can be added to the previous scroll velocity value $V_{(T-1)}$ (e.g., having scroll speed 3704). Thus, as long as the new $\Delta V_{CROWN}$ value is greater than the $\Delta V_{DRAG}$ value, the new scroll speed 3708 can be greater than scroll speed 3704. However, if the $\Delta V_{CROWN}$ value corresponding to rotation speed 3706 is less than the $\Delta V_{DRAG}$ value, the new scroll speed 3708 can be less than scroll speed 3704. In the illustrated example, the new $\Delta V_{CROWN}$ value is assumed to be greater than the $\Delta V_{DRAG}$ value. At block 2108, processor 202 can cause display 106 to update the display based on the determined scroll speed and direction. As shown in FIG. 38, this update has caused the lines of text to translate in the downward direction with scroll speed 3708. Since the $\Delta V_{CROWN}$ value corresponding to rotation speed 3706 is greater than the $\Delta V_{DRAG}$ value, scroll speed 3708 can be greater than scroll speed 3704. As a result, the lines of text have been translated a greater distance over the same length of time, causing a full line of text to be translated vertically off the display.

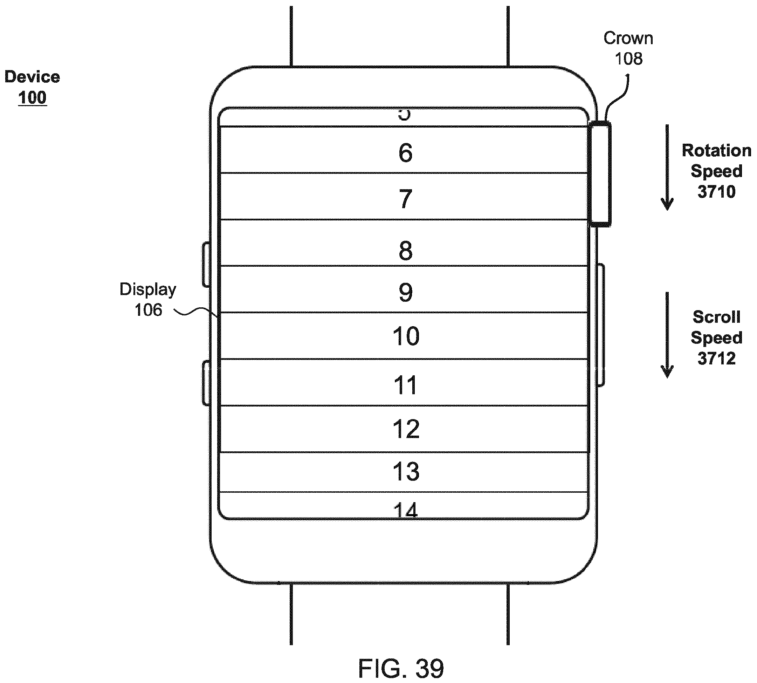

Referring now to FIG. 39, crown 108 is being rotated in the downward rotation direction with rotation speed 3710, which can be greater than rotation speed 3706. Processor 202 can again receive crown position information that reflects this rotation from encoder 204 at block 2104. Thus, at block 2106, processor 202 can convert this rotation speed into a $\Delta V_{CROWN}$ value to determine the new velocity of scrolling $V_T$. Since the display previously had a non-zero scroll speed value (e.g., as shown in FIG. 38), the new $\Delta V_{CROWN}$ value corresponding to rotation speed 3710 can be added to the previous scroll velocity value $V_{(T-1)}$ (e.g., having scroll speed 3708). Thus, as long as the new $\Delta V_{CROWN}$ value is greater than the $\Delta V_{DRAG}$ value, the new scroll speed 3712 can be greater than scroll speed 3708. However, if the $\Delta V_{CROWN}$ value

corresponding to rotation speed 3710 is less than the $\Delta V_{DRAG}$ value, the new scroll speed 3712 can be less than scroll speed 3708. In the illustrated example, the new $\Delta V_{CROWN}$ value is assumed to be greater than the $\Delta V_{DRAG}$ value. At block 2108, processor 202 can cause display 106 to update the display based on the determined scroll speed and direction. As shown in FIG. 39, this update has caused the lines of text to translate in the downward direction with scroll speed 3712. Since the $\Delta V_{CROWN}$ value corresponding to rotation speed 3710 is greater than the $\Delta V_{DRAG}$ value, scroll speed 3712 can be greater than scroll speed 3708. As a result, the lines of text have been translated a greater distance over the same length of time, causing 1.5 lines of text to be translated vertically off the display.

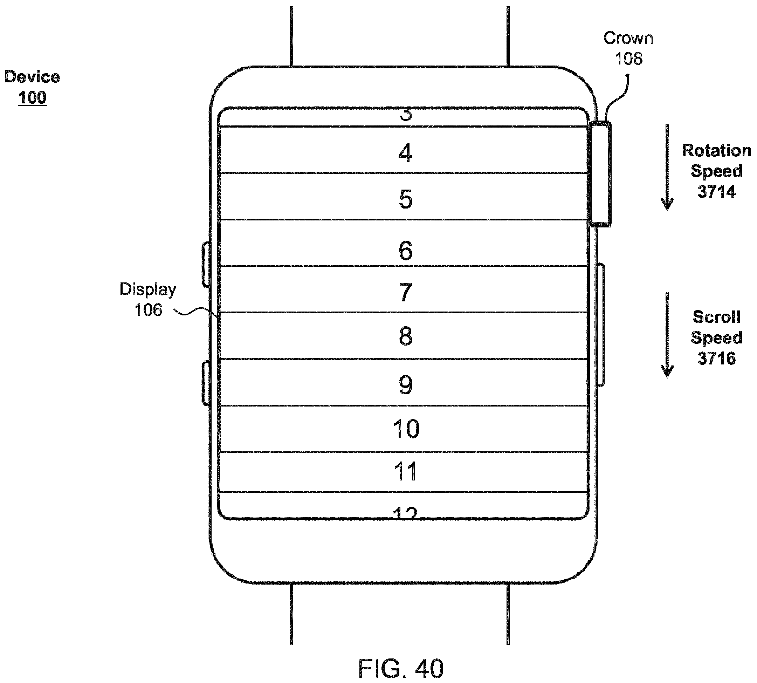

Referring now to FIG. 40, crown 108 is being rotated in the downward rotation direction with rotation speed 3714, which can be greater than rotation speed 3710. Processor 202 can again receive crown position information that reflects this rotation from encoder 204 at block 2104. Thus, at block 2110, processor 202 can convert this rotation speed into a $\Delta V_{CROWN}$ value to determine the new velocity of scrolling $V_T$. Since the display previously had a non-zero scroll speed value (e.g., as shown in FIG. 39), the new $\Delta V_{CROWN}$ value corresponding to rotation speed 3714 can be added to the previous scroll velocity value $V_{(T-1)}$ (e.g., having scroll speed 3712). Thus, as long as the new $\Delta V_{CROWN}$ value is greater than the $\Delta V_{DRAG}$ value, the new scroll speed 3716 can be greater than scroll speed 3712. However, if the $\Delta V_{CROWN}$ value corresponding to rotation speed 3714 is less than the $\Delta V_{DRAG}$ value, the new scroll speed 3716 can be less than scroll speed 3712. In the illustrated example, the new $\Delta V_{CROWN}$ value is assumed to be greater than the $\Delta V_{DRAG}$ value. At block 2108, processor 202 can cause display 106 to update the display based on the determined scroll speed and direction. As shown in FIG. 40, this update has caused the lines of text to translate in the downward direction with scroll speed 3716. Since the $\Delta V_{CROWN}$ value corresponding to rotation speed 3714 is greater than the $\Delta V_{DRAG}$ value, scroll speed 3716 can be greater than scroll speed 3712. As a result, the lines of text have been translated a greater distance over the same length of time, causing two lines of text to be translated vertically off the display.

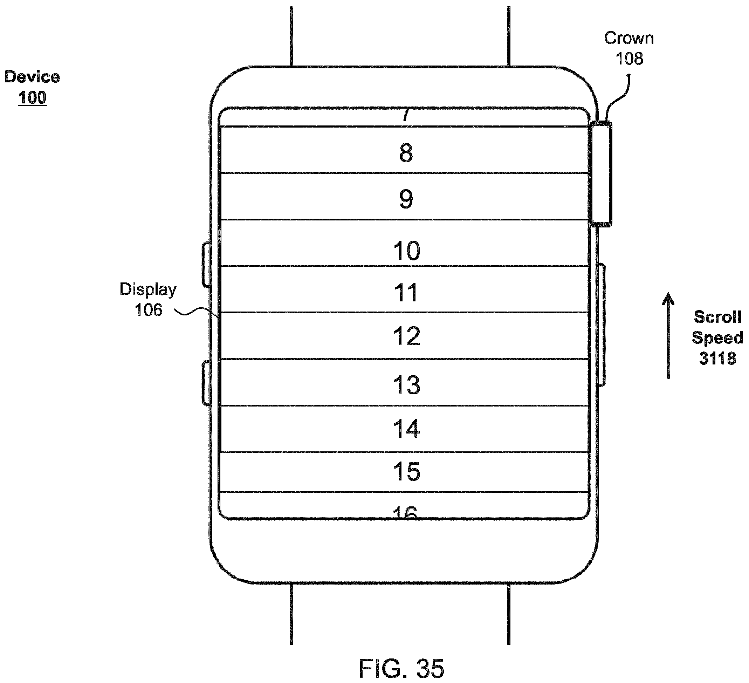

While not shown, if the rotation of crown 108 stops, the view can continue to be scrolled in a downward direction in a manner similar to that described above with respect to FIGs.35 and 36. The speed and amount of scroll that can be performed can depend on the scroll speed when the rotation of crown 108 stopped and the value used for $\Delta V_{DRAG}$.

While a specific scrolling example is provided, it should be appreciated that other types of data, such as media items, webpages, applications, or the like, can similarly be scrolled using process 2100 in a similar manner. For example, process 2100 can be performed to scroll through a list of applications in a manner similar to that described above with respect to process 300. However, the velocity of scrolling through the applications when using process 2100 can depend on the velocity of angular rotation of the crown.

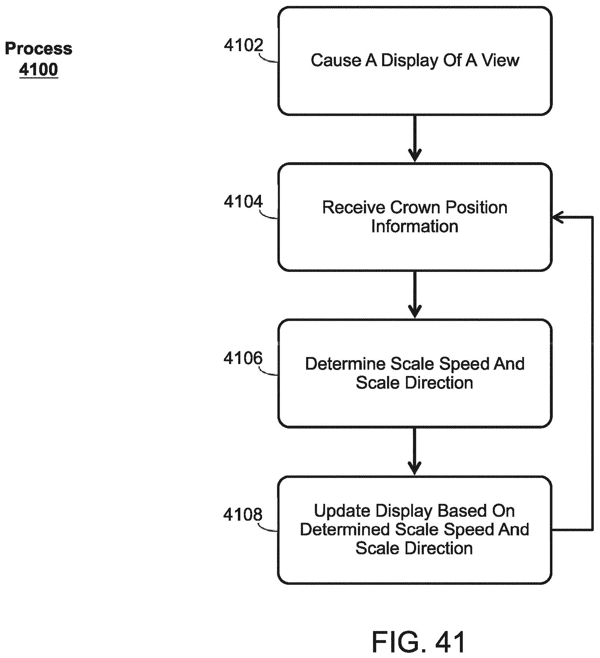

FIG. 41 illustrates an exemplary process 4100 for scaling a view of a display based on an angular velocity of rotation of a crown according to various examples. The view can include a visual representation of any type of data being displayed. For example, the view can include a display of a text, a media item, a webpage, or the like. Process 4100 can be similar to process 2100, except that process 4100 can determine a scaling velocity (e.g., an amount and direction of change in size per unit time) rather than determine a scrolling velocity. While the quantities being determined are different, they can be determined in a similar manner. In some examples, process 4100 can be performed by a wearable electronic device similar to device 100. In these examples, content or any other view can be displayed on display 106 of device 100 and process 4100 can be performed to visually scale the view in response to a turning of crown 108.

At block 4102, a view of the display of the wearable electronic device can be displayed. As mentioned above, the view can include any visual representation of any type of data that is displayed by a display of the device.

At block 4104, crown position information can be received in a manner similar or identical to that described above with respect to block 902 of process 900. For instance, the crown position information can be received by a processor (e.g., processor 202) from an encoder (e.g., encoder 204) and can include an analog or digital representation of the absolute position of the crown, a change in rotational position of the crown, or other positional information of the crown.

At block 4106, the scale velocity (e.g., speed and positive/negative scaling direction) can be determined. In some examples, the scaling of a view can be determined using a physics-based modeling of motion. For example, the velocity of scaling can be treated as a velocity of a moving object. The rotation of the crown can be treated as a force being applied to the object in a direction corresponding to the direction of rotation of the crown, where the amount of force depends on the speed of angular rotation of the crown. As a result, the scaling velocity can increase or decrease and can move in different directions. For example, a greater speed of angular rotation can correspond to a greater amount of force being applied to the object. Any desired linear or non-linear mapping between speed of angular rotation and force being applied to the object can be used. In addition, a drag force can be applied in a direction opposite the direction of motion (e.g., scaling). This can be used to cause the velocity of scaling to decay over time, allowing the scaling to stop absent additional input from the user. Thus, the velocity of scaling at discrete moments in time can take the general form of:

$$V_T = V_{(T-1)} + \Delta V_{CROWN} - \Delta V_{DRAG}. \qquad (1.2)$$

In equation 1.2, $V_T$ represents the determined scale velocity (speed and direction) at time T, $V_{(T-1)}$ represents the previous scale velocity (speed and direction) at time T-1, $\Delta V_{CROWN}$ represents the change in scale velocity caused by the force applied in response to the rotation of the crown, and $\Delta V_{DRAG}$ represents the change in scale velocity caused by the drag force opposing the motion of the scaling. As mentioned above, the force applied to the scaling by the crown can depend on the speed of angular rotation of the crown. Thus, $\Delta V_{CROWN}$ can also depend on the speed of angular rotation of the crown. Typically, the greater the speed of angular rotation of the crown, the greater the value of $\Delta V_{CROWN}$ will be. However, the actual mapping between the speed of angular rotation of the crown and $\Delta V_{CROWN}$ can be varied depending on the desired user feel of the scaling effect. In some examples, the $\Delta V_{DRAG}$ can depend on the velocity of scaling, such that at greater velocities, a greater opposing change in scaling can be produced. In other examples, $\Delta V_{DRAG}$ can have a constant value. However, it should be appreciated that any constant or variable amount of opposing change in velocity can be used to produce a desired scaling effect. Note, typically, in the absence of user input in the form of $\Delta V_{CROWN}$, $V_T$ will approach (and become) zero based on $\Delta V_{DRAG}$ in accordance with equation 1.2, but $V_T$ would not change signs without user input in the form of crown rotation ($\Delta V_{CROWN}$).

As can be seen from equation 1.2, the velocity of scaling can continue to increase as long as $\Delta V_{CROWN}$ is greater than $\Delta V_{DRAG}$. Additionally, the velocity of scaling can have non-zero values even when no $\Delta V_{CROWN}$ input is being received. Thus, if the view is scaling with a non-zero velocity, it can continue to scale without the user rotating the crown. The scale amount and time until the scaling stops can depend on the scale velocity at the time the user stops rotating the crown and the $\Delta V_{DRAG}$ component.

In some examples, when the crown is rotated in the opposite direction corresponding to a scale direction that is opposite the direction that the view is currently being scaled, the $V_{(T-1)}$ component can be reset to a value of zero, allowing the user to quickly change the direction of the scaling without having to provide a force sufficient to offset the current scale velocity of the view.

At block 4108, the display can be updated based on the scale speed and direction determined at block 4106. This can include scaling the view by an amount corresponding to the determined scale speed and in a direction (e.g., larger or smaller) corresponding to the determined scale direction. The process can then return to block 4104, where additional crown position information can be received.

It should be appreciated that blocks 4104, 4106, and 4108 can be repeatedly performed at any desired frequency to continually determine the speed of scaling and to update the display accordingly.

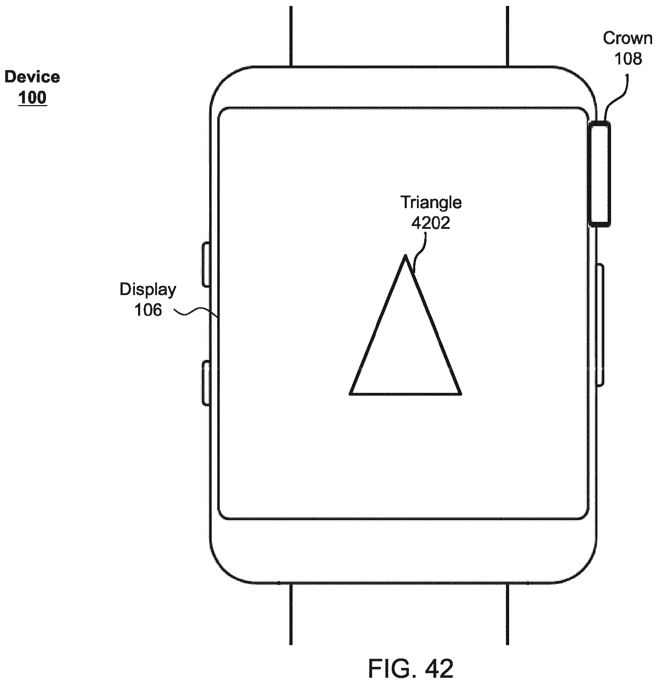

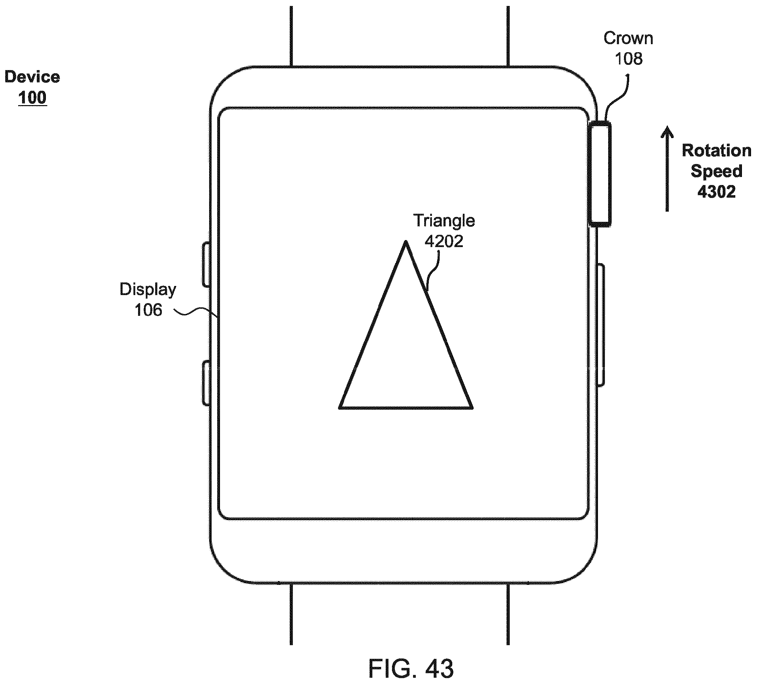

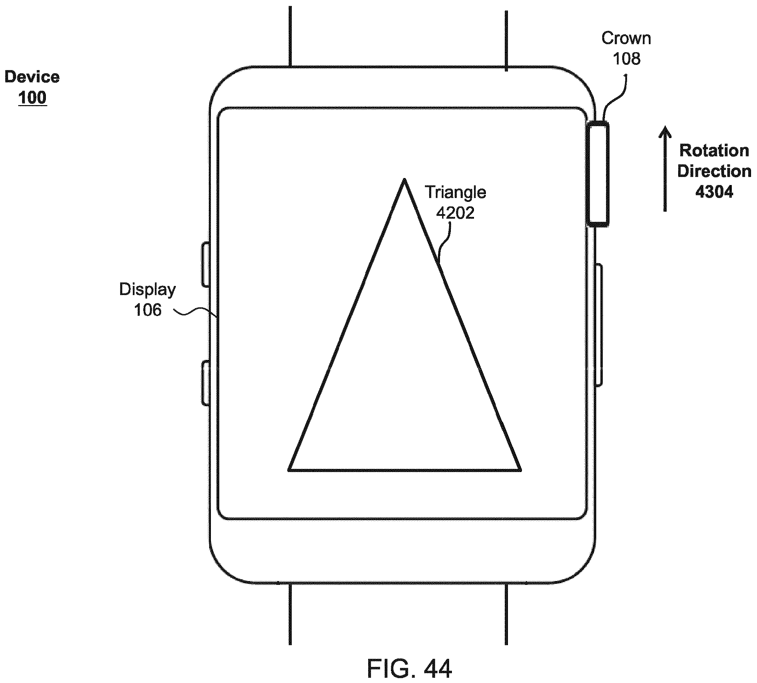

To further illustrate the operation of process 4100, FIG. 42 depicts an example interface of device 100 having an image of triangle 4202. At block 4102 of process 4100, processor 202 of device 100 can cause display 106 to display the illustrated triangle 4202. At block 4104, processor 202 can receive crown position information from encoder 204. At block 4106, a scale speed and scale direction can be determined. Since the current scroll velocity is zero and since crown 108 is not currently being rotated, it can be determined using equation 1.2 that the new velocity of scaling is zero. At block 4108, processor 202 can cause display 106 to update the display using the speed and direction determined at block 4106. However, since the determined velocity was zero, no change to the display need be made. For purposes of explanation, FIGs. 43 and 44 depict subsequent views of the interface shown in FIG. 42 at different points of time, where the length of time between each view is equal.

Referring now to FIG. 43, crown 108 is being rotated in the upward rotation direction with rotation speed 4302. Processor 202 can again receive crown position information that reflects this rotation from encoder 204 at block 4104. Thus, at block 4106, processor 202 can convert this rotation speed into a $\Delta V_{CROWN}$ value to determine the new velocity of scaling $V_T$. In this example, rotation of crown in the upward direction equates to a positive scaling direction (e.g., increasing the size of the view). In other examples, other directions can be used. At block 4108, processor 202 can cause display 106 to update the display based on the determined scale speed and direction. As shown in FIG. 43, this update has caused triangle 4202 to increase in size with a rate of change corresponding to the determined scale speed. Since crown 108 has only begun to rotate, rotation speed 4302 can be relatively low compared to typical rotation speeds of the crown. Thus, the scale speed can similarly have a relatively low value compared to typical or maximum scroll speeds. As a result, only a small change in size of triangle 4202 can be observed.

Referring now to FIG. 43, crown 108 is being rotated in the upward rotation direction with rotation speed 4304, which can be greater than rotation speed 4302. Processor 202 can again receive crown position information that reflects this rotation from encoder 204 at block 4104. Thus, at block 4106, processor 202 can convert this rotation speed into a $\Delta V_{CROWN}$ value to determine the new velocity of scaling $V_T$. Since the display previously had a non-zero scale velocity value (e.g., as shown in FIG. 43), the new $\Delta V_{CROWN}$ value corresponding to rotation speed 4304 can be added to the previous scale velocity value $V_{(T-1)}$. Thus, as long as the new $\Delta V_{CROWN}$ value is greater than the $\Delta V_{DRAG}$ value, the new scale velocity can be greater than the previous scale velocity. However, if the $\Delta V_{CROWN}$ value corresponding to rotation speed 4304 is less than the $\Delta V_{DRAG}$ value, the new scale velocity can be less than the previous scale velocity. In the illustrated example, the new $\Delta V_{CROWN}$ value is assumed to be greater than the $\Delta V_{DRAG}$ value. At block 4108, processor 202 can cause display 106 to update the display based on the determined scale speed and direction. As shown in FIG. 44, this update has caused triangle 4202 to increase in size with the determined scale velocity. Since the $\Delta V_{CROWN}$ value corresponding to rotation speed 4304 is greater than the $\Delta V_{DRAG}$ value, the scale velocity can be greater than the previous scale velocity. As a result, a larger change in size of triangle 4202 can be observed than that illustrated in FIG. 43.

Similar to the scrolling performed using process 2100, the scaling of the view containing triangle 4202 can continue after rotation of crown 108 has ceased. However, the rate at which the view containing triangle 4202 increases in size can decrease over time due to the $\Delta V_{DRAG}$ value of equation 1.2. Additionally, a similar scaling that decreases the size of the view containing triangle 4202 can be performed in response to crown 108 being rotated in the opposite direction. The velocity of the scaling can be calculated in a similar manner as that used to calculate the positive scaling shown in FIGs. 42-44. Moreover, similar to the scrolling performed using process 2100, the speed and direction of scaling can be set to zero in response to a rotation of crown 108 in a direction opposite the direction of scaling. This can be performed to allow the user to quickly change the direction of the scaling.

Moreover, in some examples, when reaching a minimum or maximum scaling of a view, the velocity scaling can reverse directions. For example, the velocity of scaling can cause the view to zoom-in with a non-zero speed. Upon reaching a scaling limit, the direction of the scaling can reverse to cause the view to scale in the opposite direction (e.g., zoom-out) with the same speed that the view was scaling prior to reaching the scaling limit.

In some examples, the scrolling or scaling performed in any of the processes described above (e.g., process 300, 900, 1500, 2100, or 4100) can be stopped in response to a change of context of the electronic device. A context can represent any condition that makes up the environment in which the crown position information is being received. For example, a context can include a current application being executed by the device, a type of application or process being displayed by the device, a selected object within a view of the device, or the like. To illustrate, if crown position information indicating that a change in position of crown 108 is being received while performing process 300, device 100 can scroll through a list of applications, as described above. However, in response to a change in context in the form of a user selecting one of the displayed applications, which causes device 100 to open the application, device 100 can cease to perform the previously occurring scrolling function of block 306 to prevent the scrolling function from being performed within the opened application. In some examples, after detecting a change in context, device 100 can also ignore inputs from crown 108 by ceasing to perform the scrolling function of block 306 even if crown 108 continues to be rotated. In some examples, device 100 can cease to perform the scrolling function of block 306 in response to a change in position of crown 108 for a threshold length of time after detecting a change in context. The threshold length of time can be any desired time, such as 1, 2, 3, 4, or more seconds. A similar behavior can also be performed in response to detecting a change in context while performing process 900 or 1500. For example, device 100 can cease to perform a previously occurring scrolling or scaling function in response to detecting a change in context. Additionally, in some examples after detecting a change in context, device 100 can also ignore inputs from crown 108 by ceasing to scroll or zoom a view in response to changes in position of crown 108 for a threshold length of time after detecting the change in context. A similar behavior can also be performed in response to detecting a change in context while performing blocks 2100 or 4100. For example, device 100 can stop a previously occurring scrolling or zooming function having a non-zero speed in response to detecting a change in context. Additionally, in some examples after detecting a change in context, device 100 can also ignore inputs from crown 108 by ceasing to scroll or zoom a view in response to changes in position of crown 108 for a threshold length of time after detecting the change in context. Stopping a scrolling or scaling function and/or ignoring future inputs from crown 108 in response to detecting a change in context can advantageously prevent an input entered while operating in one context from carrying over to another context in an undesired way. For example, a user can use crown 108 to scroll through a list of applications using process 300 and can select a desired music application while the momentum of crown 108 causes crown 108 to continue to spin. Without stopping the scrolling function and without ignoring inputs from crown 108 in response to detecting the change in context, device 100 can cause a scrolling function to be performed within the selected application or can interpret the input from crown 108 in another manner (e.g., to adjust a volume of the music application) unintended by the user.

In some examples, changes in certain types of contexts may not result in device 100 stopping an ongoing scrolling or scaling function and/or causing device 100 to ignore future inputs from crown 108. For example, if device 100 is simultaneously displaying multiple views or objects within display 106, selection between the displayed views or objects may not cause device 100 to stop the scrolling or scaling function and/or may not cause device 100 to ignore future inputs of crown 108, as described above. For example, device 100 can simultaneously display two sets of lines of text similar to that shown in FIG. 10. In this example, device 100 can scroll through one of the sets using process 900. In response to a user selection of the other set of lines of text (e.g., via a tap on the touch-sensitive display of device 100 at a location corresponding to the other set of lines of text), device 100 can begin to scroll through the other set of lines of text based on the previous scroll speed and/or current detected changes in position of crown 108. However, if a different type of change in context occurs (e.g., a new application is opened, an item not currently being displayed by device 100 is selected, or the like), device 100 can stop an ongoing scrolling or scaling function and/or can ignore inputs from crown 108 for a threshold length of time, as described above. In other examples, rather than begin to scroll through the other set of lines of text based on the previous scroll speed and/or the current change in position of crown 108 in response to a user selection of the other set of lines of text (e.g., via a tap on the touch-sensitive display of device 100 at a location corresponding to the other set of lines of text), device 100 can stop an ongoing scrolling or scaling function and/or can ignore inputs from crown 108 for a threshold length of time. However, the threshold length of time can be shorter than the threshold length of time used for changes in other types of changes in context (e.g., a new application is opened, an item not currently being displayed by device 100 is selected, or the like). While specific types of context changes are provided above, it should be appreciated that any type of context changes can be selected.

In some examples, device 100 can include a mechanism for detecting physical contact with crown 108. For example, device 100 can include a capacitive sensor configured to detect changes in capacitance caused by contact with crown 108, a resistive sensor configured to detect changes in resistance caused by contact with crown 108, a pressure sensor configured to detect a depression of crown 108 caused by contact with crown 108, a temperature sensor configured to detect a change in temperature of crown 108 caused by contact with crown 108, or the like. It should be appreciated that any desired mechanism for detecting contact with crown 108 can be used. In these examples, the presence or absence of contact with crown 108 can be used to stop the scrolling or scaling performed in any of the processes described above (e.g., process 300, 900, 1500, 2100, or 4100). For instance, in some examples, device 100 can be configured to perform scrolling or scaling functions as described above with respect to processes 300, 900, 1500, 2100, or 4100. In response to detecting an abrupt stop in the rotation of crown 108 (e.g., a stop or decrease in rotation speed that exceeds a threshold value) while contact with crown 108 is detected, device 100 can stop the scrolling or scaling being performed. This occurrence can represent the situation where the user quickly rotates crown 108, but intentionally brings it to a stop, indicating a desire to halt the scrolling or scaling. However, in response to detecting an abrupt stop in the rotation of crown 108 (e.g., a stop or decrease in rotation speed that exceeds a threshold value) while contact with crown 108 is not detected, device 100 can continue the scrolling or scaling being performed. This occurrence can represent the situation where the user quickly rotates crown 108 by performing a forward or backwards flicking gesture, removes their finger from crown 108, and rotates their wrist back in order to further wind crown 108 using another flicking gesture. In this situation, it is likely that the user does not intend for the scrolling or scaling to stop.

While processes 300, 900, 2100, ad 4100 have been described above as being used to perform scrolling or scaling of objects or views of a display, it should be appreciated that they can more generally be applied to adjust any type of value associated with the electronic device. For example, rather than scroll or scale a view in a particular direction in response to a change in position of crown 108, device 100 can instead increase a selected value (e.g., a volume, a time within a video, or any other value) by an amount or a speed in a manner similar to that described above for scrolling or scaling. Additionally, rather than scroll or scale a view in an opposite direction in response to a change in position of crown 108 in the opposite direction, device 100 can instead decrease the selected value by an amount or a speed in a manner similar to that described above for scrolling or scaling.

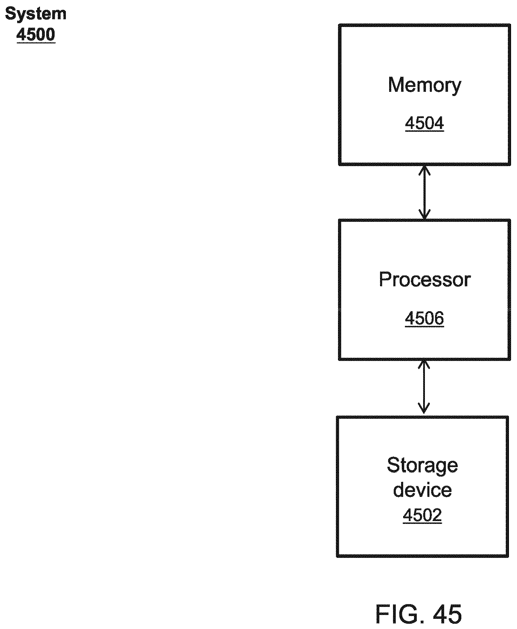

One or more of the functions relating to scaling or scrolling a user interface can be performed by a system similar or identical to system 4500 shown in FIG. 45. System 4500 can include instructions stored in a non-transitory computer readable storage medium, such as memory 4504 or storage device 4502, and executed by processor 4506. The instructions can also be stored and/or transported within any non-transitory computer readable storage medium for use by or in connection with an instruction execution system, apparatus, or device, such as a computer-based system, processor-containing system, or other system that can fetch the instructions from the instruction execution system, apparatus, or device and execute the instructions. In the context of this document, a "non-transitory computer readable storage medium" can be any medium that can contain or store the program for use by or in connection with the instruction execution system, apparatus, or device. The non-transitory computer readable storage medium can include, but is not limited to, an electronic, magnetic, optical, electromagnetic, infrared, or semiconductor system, apparatus or device, a portable computer diskette (magnetic), a random access memory (RAM), a read-only memory (ROM), an erasable programmable read-only memory (EPROM) (magnetic), a portable optical disc such a CD, CD-R, CD-RW, DVD, DVD-R, or DVD-RW, or flash memory such as compact flash cards, secured digital cards, USB memory devices, memory sticks, and the like.

The instructions can also be propagated within any transport medium for use by or in connection with an instruction execution system, apparatus, or device, such as a computer-based system, processor-containing system, or other system that can fetch the instructions from the instruction execution system, apparatus, or device and execute the instructions. In the context of this document, a "transport medium" can be any medium that can communicate, propagate or transport the program for use by or in connection with the instruction execution system, apparatus, or device. The transport medium can include, but is not limited to, an electronic, magnetic, optical, electromagnetic or infrared wired or wireless propagation medium.

In some examples, system 4500 can be included within device 100. In these examples, processor 4506 can be used as processor 202. Processor 4506 can be configured to receive the output from encoder 204, buttons 110, 112, and 114, and from touch-sensitive display 106. Processor 4506 can process these inputs as described above with respect to FIGs. 3, 9, 15, 21, and 41, and processes 300, 900, 1500, 2100, and 4100. It is to be understood that the system is not limited to the components and configuration of FIG. 45, but can include other or additional components in multiple configurations according to various examples.

Although the disclosure and examples have been fully described with reference to the accompanying drawings, it is to be noted that various changes and modifications will become apparent to those skilled in the art. The scope of the invention is defined by the appended claims.

**Claims**

1. A computer-implemented method comprising:

   receiving crown position information (902) associated with a physical crown (108) of an electronic device (100);
   determining that a rotation of the physical crown has occurred based on the received crown position information;
   in response to determining (904) that the rotation of the physical crown has occurred, causing a view displayed on a touch-sensitive display (106) of the electronic device to be scrolled (906) in a first direction (1104, 1108);
   **characterised in that**,
   while the view displayed on the touch-sensitive display of the electronic device has been scrolled so that a terminal data item of a list of data items has been scrolled away from an edge of the touch-sensitive display, determining that the rotation of the physical crown has ceased; and
   in response to determining that the rotation of the physical crown has ceased and the view displayed on the touch-sensitive display of the electronic device has been scrolled so that a terminal data item (1004, 1002) of a list of data items has been scrolled away from the edge of the touch-sensitive display, causing the view displayed on the touch-sensitive display of the electronic device to be moved in a second direction opposite to the first direction so that the terminal data item of a list of data items is moved to the edge of the touch-sensitive display.

2. The computer-implemented method of claim 1, wherein causing the view displayed on the touch-sensitive display to be scrolled comprises causing the view to be scrolled in the determined scroll direction with a determined scroll speed.

3. The computer-implemented method of any of claims 1-2, wherein the electronic device comprises a watch.

4. The computer-implemented method of any of claims 2-3, wherein the determined scroll speed is based on:

   adding a crown scroll speed component to a previous scroll speed, wherein the crown scroll speed component represents a change in scroll speed based on the velocity of angular rotation of the rotation of the physical crown; and
   subtracting a drag scroll speed component from the sum of the crown scroll speed component and the previous scroll speed, wherein the result is the determined scroll speed.

5. The computer-implemented method of any of claims 1-4, wherein the crown position information comprises an absolute rotational position of the physical crown.

6. The computer-implemented method of any of claims 1-4, wherein the crown position information comprises a change in rotational position of the physical crown over a length of time.

7. The computer-implemented method of any of claims 1-6, wherein the physical crown is a mechanical crown.

8. One or more programs configured to
   be executed by one or more processors of an electronic device with a touch-sensitive display, the one or more programs including instructions for performing any of the methods of claims 1-7.

9. An electronic device (100) comprising:

   one or more processors (202);
   a physical crown (108);
   a touch-sensitive display (106);
   a memory; and
   one or more programs, wherein the one or more programs are stored in the memory and
   configured to be executed by the one or more processors, the one or more programs including instructions for performing any of the methods of claims 1-7.

**Patentansprüche**

1. Computerimplementiertes Verfahren, umfassend: Empfangen von Kronenpositionsinformation (902), die einer physischen Krone (108) einer elektronischen Vorrichtung (100) zugeordnet ist; Bestimmen, dass eine Drehung der physischen Krone aufgetreten ist, basierend auf der empfangenen Kronenpositionsinformation; als Reaktion auf das Bestimmen (904), dass die Drehung der physischen Krone aufgetreten ist, Veranlassen, dass eine Ansicht, die auf einer berührungsempfindlichen Anzeige (106) der elektronischen Vorrichtung angezeigt wird, in einer ersten Richtung (1104, 1108) gescrollt wird (906); **dadurch gekennzeichnet, dass**, während die Ansicht, die auf der berührungsempfindlichen Anzeige der elektronischen Vorrichtung angezeigt wird, so gescrollt wurde, dass ein Enddatenelement einer Liste von Datenelementen von einem Rand der berührungsempfindlichen Anzeige weg gescrollt wurde, bestimmt wird, dass die Drehung der physischen Krone aufgehört hat; und als Reaktion auf das Bestimmen, dass die Drehung der physischen Krone aufgehört hat und die Ansicht, die auf der berührungsempfindlichen Anzeige der elektronischen Vorrichtung angezeigt wird, so gescrollt wurde, dass ein Enddatenelement (1004, 1002) einer Liste von Datenelementen von dem Rand der berührungsempfindlichen Anzeige weg gescrollt wurde, Veranlassen, dass die Ansicht, die auf der berührungsempfindlichen Anzeige der elektronischen Vorrichtung angezeigt wird, in einer zweiten Richtung entgegengesetzt zu der ersten Richtung bewegt wird, so dass das Enddatenelement einer Liste von Datenelementen zu dem Rand der berührungsempfindlichen Anzeige bewegt wird.

2. Computerimplementiertes Verfahren nach Anspruch 1, wobei das Veranlassen, dass die Ansicht, die auf der berührungsempfindlichen Anzeige angezeigt wird, gescrollt wird, das Veranlassen umfasst, dass die Ansicht in der bestimmten Scrollrichtung mit einer bestimmten Scrollgeschwindigkeit gescrollt wird.

3. Computerimplementiertes Verfahren nach einem der Ansprüche 1-2, wobei die elektronische Vorrichtung eine Uhr umfasst.

4. Computerimplementiertes Verfahren nach einem der Ansprüche 2-3, wobei die bestimmte Scrollgeschwindigkeit auf Folgendem basiert: Hinzufügen einer Kronen-Scrollgeschwindigkeitskomponente zu einer vorherigen Scrollgeschwindigkeit, wobei die Kronen-Scrollgeschwindigkeitskomponente eine Änderung der Scrollgeschwindigkeit basierend auf der Schnelligkeit der Winkeldrehung der Drehung der physischen Krone darstellt; und Subtrahieren einer Zieh-Scrollgeschwindigkeitskomponente von der Summe der Kronen-Scrollgeschwindigkeitskomponente und der vorherigen Scrollgeschwindigkeit, wobei das Ergebnis die bestimmte Scrollgeschwindigkeit ist.

5. Computerimplementiertes Verfahren nach einem der Ansprüche 1-4, wobei die Kronenpositionsinformation eine absolute Drehposition der physischen Krone umfasst.

6. Computerimplementiertes Verfahren nach einem der Ansprüche 1-4, wobei die Kronenpositionsinformation eine Änderung der Drehposition der physischen Krone über eine Zeitdauer umfasst.

7. Computerimplementiertes Verfahren nach einem der Ansprüche 1-6, wobei die physische Krone eine mechanische Krone ist.

8. Ein oder mehrere Programme, die konfiguriert sind, um von einem oder mehreren Prozessoren einer elektronischen Vorrichtung mit einer berührungsempfindlichen Anzeige ausgeführt zu werden, wobei das eine oder die mehreren Programme Anweisungen zum Durchführen eines der Verfahren der Ansprüche 1-7 beinhalten.

9. Elektronische Vorrichtung (100), umfassend: einen oder mehrere Prozessoren (202); eine physische Krone (108); eine berührungsempfindliche Anzeige (106); einen Speicher; und ein oder mehrere Programme, wobei das eine oder die mehreren Programme in dem Speicher gespeichert und konfiguriert sind, um von dem einen oder den mehreren Prozessoren ausgeführt zu werden, wobei das eine oder die mehreren Programme Anweisungen zum Durchführen eines der Verfahren der Ansprüche 1-7 beinhalten.

**Revendications**

1. Un procédé mis en œuvre par calculateur, comprenant :

la réception d'une information de position de couronne (902) associée à une couronne physique (108) d'un dispositif électronique (100) ;

la détermination qu'une rotation de la couronne physique a eu lieu, sur la base de l'information de position de couronne reçue ;

en réponse à la détermination (904) que la rotation de la couronne physique a eu lieu, faire défiler (906) dans une première direction (1104, 1108) une vue affichée sur un afficheur sensible au toucher (106) du dispositif électronique ;

**caractérisé en ce que**,

lorsque la vue affichée sur l'afficheur sensible au toucher du dispositif électronique a défilé de telle sorte qu'un élément de donnée de terminal d'une liste d'éléments de donnée ait défilé hors d'un bord de l'afficheur sensible au toucher, la détermination que la rotation de la couronne physique a cessé ; et

en réponse à la détermination que la rotation de la couronne physique a cessé et que la vue affichée sur l'afficheur sensible au toucher du dispositif électronique a défilé de telle sorte qu'un élément de donnée de terminal (1004, 1002) d'une liste d'éléments de donnée ait défilé hors du bord de l'afficheur sensible au toucher, faire se déplacer la vue affichée sur l'afficheur sensible au toucher du dispositif électronique dans une seconde direction opposée à la première direction de sorte que l'élément de donnée de terminal d'une liste d'éléments de donnée soit déplacé vers le bord de l'afficheur sensible au toucher.

2. Le procédé mis en œuvre par calculateur de la revendication 1, dans lequel faire défiler la vue affichée sur l'afficheur sensible au toucher comprend le fait de faire défiler la vue dans la direction de défilement déterminée avec une vitesse de défilement déterminée.

3. Le procédé mis en œuvre par calculateur de l'une des revendications 1 à 2, dans lequel le dispositif électronique comprend une montre.

4. Le procédé mis en œuvre par calculateur de l'une des revendications 2 à 3, dans lequel la vitesse de défilement déterminée est basée sur :

l'ajout d'une composante de vitesse de défilement de couronne à une vitesse de défilement antérieure, la composante de vitesse de défilement de couronne représentant un changement de vitesse de défilement basé sur la vitesse de rotation angulaire de la rotation de la couronne physique ; et

la soustraction d'une composante de vitesse de défilement en glissement d'avec la somme de la composante de vitesse de défilement de couronne et de la vitesse de défilement antérieure, le résultat étant la vitesse de défilement déterminée.

5. Le procédé mis en œuvre par calculateur de l'une des revendications 1 à 4, dans lequel l'information de position de couronne comprend une position absolue en rotation de la couronne physique.

6. Le procédé mis en œuvre par calculateur de l'une des revendications 1 à 4, dans lequel l'information de position de couronne comprend un changement de la position en rotation de la couronne physique sur un laps de temps.

7. Le procédé mis en œuvre par calculateur de l'une des revendications 1 à 6, dans lequel la couronne physique est une couronne mécanique.

8. Un ou plusieurs programmes configurés pour être exécutés par un ou plusieurs processeurs d'un dispositif électronique avec un afficheur sensible au toucher, les un ou plusieurs programmes comprenant des instructions pour mettre en œuvre l'un des procédés des revendications 1 à 7.

9. Un dispositif électronique (100) comprenant :

un ou plusieurs processeurs (202) ;
une couronne physique (108) ;
un afficheur sensible au toucher (106) ;
une mémoire ; et
un ou plusieurs programmes, les un ou plusieurs programmes étant stockés dans la mémoire et
étant configurés pour être exécutés par les un ou plusieurs processeurs, les un ou plusieurs programmes comprenant des instructions pour mettre en œuvre l'un des procédés des revendications 1 à 7.

FIG. 1

Device
100

Body
102

Crown
108

Button
110

Strap
104

Strap
104

Display
106

Button
112

Button
114

**Device**
**100**

Buttons
110/112/114

Processor
202

Encoder
204

Crown
108

Display
106

FIG. 2

**Process**
**300**

302 — Receive Crown Position Information

304 — Change In Position Detected?

No

Yes

306 — Scroll Through At Least A Portion Of A Set Of Applications Based On The Detected Change In Position

FIG. 3

FIG. 4

**Device 100**

Crown 108

Rotation Direction 502

App 406

App 404

Display 106

Scroll Direction 504

FIG. 5

FIG. 6

EP 3 757 686 B1

FIG. 7

EP 3 757 686 B1

Rotation
Direction
506

Crown
108

App
408

App
406

Scroll
Direction
508

App
404

Display
106

Device
100

FIG. 8

**Process**
**900**

FIG. 9

EP 3 757 686 B1

FIG. 10

FIG. 11

FIG. 12

EP 3 757 686 B1

Device
100

Crown
108

Rotation
Direction
1106

Scroll
Direction
1108

Line
1002

Display
106

Line
1004

2
3
4
5
6
7
8
9

FIG. 13

FIG. 14

EP 3 757 686 B1

**Process**
**1500**

1502 — Receive Crown Position Information

1504 — Change In Position Detected?

No

Yes

1506 — Scale A View Of A Display Based On The Detected Change In Position

FIG. 15

EP 3 757 686 B1

34

FIG. 16

FIG. 17

EP 3 757 686 B1

FIG. 18

Device
**100**

Crown
108

Rotation
Direction
1704

Triangle
1602

Display
106

EP 3 757 686 B1

38

FIG. 19

Device 100

Crown 108

Rotation Direction 1704

Triangle 1602

Display 106

FIG. 20

EP 3 757 686 B1

**Process**
**2100**

2102 — Cause A Display Of A View

2104 — Receive Crown Position Information

2106 — Determine Scroll Speed And Scroll Direction

2108 — Update Display Based On Determined Scroll Speed And Scroll Direction

FIG. 21

FIG. 22

FIG. 23

EP 3 757 686 B1

FIG. 24

FIG. 25

EP 3 757 686 B1

FIG. 26

**Device 100**

**Crown 108**

**Display 106**

8
9
10
11
12
13
14
15
16

Scroll Speed 2318

FIG. 27

EP 3 757 686 B1

FIG. 28

Device **100**

Crown **108**

Display **106**

Scroll Speed **2320**

FIG. 29

EP 3 757 686 B1

FIG. 30

EP 3 757 686 B1

FIG. 31

FIG. 32

EP 3 757 686 B1

FIG. 33

FIG. 34

EP 3 757 686 B1

FIG. 35

FIG. 36

FIG. 37

FIG. 38

FIG. 39

FIG. 40

EP 3 757 686 B1

**Process**
**4100**

4102 — Cause A Display Of A View

4104 — Receive Crown Position Information

4106 — Determine Scale Speed And Scale Direction

4108 — Update Display Based On Determined Scale Speed And Scale Direction

FIG. 41

FIG. 42

Device
**100**

Crown
108

Rotation
Speed
4302

Triangle
4202

Display
106

EP 3 757 686 B1

FIG. 43

FIG. 44

EP 3 757 686 B1

System
4500

FIG. 45

**REFERENCES CITED IN THE DESCRIPTION**

**Patent documents cited in the description**

- US 61873356
- US 61873359
- US 61959851
- US 61873360
- US 47665714
- US 61747278
- US 2012054670 A1
- US 7081905 B1
- US 6661438 B1